# EUROPEAN PATENT SPECIFICATION

(11) **EP 3 836 021 B1**
(45) Date of publication and mention of the grant of the patent: **15.05.2024**
(21) Application number: 18933825.4
(22) Date of filing: 19.09.2018
(51) Int. Cl.: G06N 3/10, G06N 3/08

(54) **AI MODEL DEVELOPMENT METHOD AND DEVICE**
VERFAHREN UND VORRICHTUNG ZUR KI-MODELLENTWICKLUNG
PROCÉDÉ ET DISPOSITIF DE DÉVELOPPEMENT DE MODÈLE À AI

(43) Date of publication of application: 16.06.2021
(73) Proprietor: HUAWEI TECHNOLOGIES CO., LTD., Shenzhen, Guangdong 518129 (CN)
(72) Inventor: YU, Chao, Shenzhen, Guangdong 518129, (CN); XIE, Miao, Shenzhen, Guangdong 518129, (CN); XU, Xiang, Shenzhen, Guangdong 518129, (CN)
(74) Representative: MERH-IP Matias Erny Reichl Hoffmann Patentanwälte PartG mbB
(86) International application number: PCT/CN2018/106566
(87) International publication number: WO 2020/056647

(56) References cited:
- CN-A- 106 547 871
- CN-A- 106 548 210
- US-A1- 2012 077 158
- US-A1- 2018 136 912
- US-B1- 9 817 931
- KAORU OTA ET AL: "Deep Learning for Mobile Multimedia", ACM TRANSACTIONS ON MULTIMEDIA COMPUTING COMMUNICATIONS ANDAPPLICATIONS, ASSOCIATION FOR COMPUTING MACHINERY, US, vol. 13, no. 3s, 28 June 2017 (2017-06-28) , pages 1-22, XP058372999, ISSN: 1551-6857, DOI: 10.1145/3092831

## Description

### TECHNICAL FIELD

Embodiments of this application relate to the field of artificial intelligence (artificial intelligence, AI) technologies, and in particular, to an AI model development method and apparatus.

### BACKGROUND

With development of communications technologies and enhancement of a terminal computing capability, a mobile terminal gradually becomes an indispensable universal device in people's life, entertainment, work, and learning, and plays a role of a personal intelligent assistant. AI is a technology that is necessary for mobile terminals to implement artificial intelligence.

Traditionally, a cloud can obtain a plurality AI models through training based on different service requirements. The mobile terminal may transmit to-be-processed data to an AI service interface of the cloud through a network. The cloud processes the to-be-processed data by using a corresponding AI model, and then transmits a processing result to the mobile terminal through the AI service interface. However, as people pay more attention to personal privacy, increasingly strong demands for on-device AI models have been raised. The on-device AI model means that an AI model is configured in a mobile terminal, and the mobile terminal processes to-be-processed data by using the AI model.

In a solution, dedicated AI processing chips such as a neural network processing unit (neural network processing unit, NPU) chip and an intelligent video processing unit (Video Processing Unit, VPU) chip may be carried in the mobile terminal. However, a development process of the foregoing dedicated AI processing chip is extremely cumbersome, and development costs are comparatively high.

In another solution, a cloud-based AI model may be configured on a mobile terminal. However, the cloud-based AI model usually occupies a large amount of memory space. In addition, the mobile terminal needs to have a comparatively strong computing capability, so that a processing result can be obtained within a comparatively short time by using the AI model. As a result, AI models cannot be widely configured in mobile terminals. In some solutions, technologies such as tailoring and compression on an AI model may be used to attempt to reduce a size of an AI model, and increase an operation speed of the AI model, so as to reduce a requirement on the mobile terminal. However, different mobile terminals have different systems and can provide different running environments for the AI model, and different mobile terminals have different requirements on performance (for example, power consumption and storage space occupation) of the AI model. In the foregoing solution, a developer with a comparatively high service capability is required to optimize a plurality of AI models one by one based on a running environment of each terminal and a performance requirement for an AI model, resulting in a high difficulty in debugging and comparatively high development costs.
Document Us 2018/136912 A1 generally relates to systems and methods that may automatically generate code for deep learning networks. In particular, the systems and methods may provide a code generation framework for generating target specific code. The code generation framework may include one or more predefined class hierarchies for constructing objects of the generated code. The objects of the class hierarchies may provide an interface to predefined libraries of deep learning functions optimized for use on a target platform. The systems and methods may perform one or more optimizations on the code being generated.

### SUMMARY

Embodiments of this application provide an AI model development method and apparatus, to develop, with comparatively low costs, an AI model that satisfies a running environment and a performance requirement of a terminal. In particular, there is provided an AI model development method and a development platform, having the features of respective independent claims. The dependent claims relate to preferred embodiments.

According to a first aspect, an embodiment of this application provides an AI model development method. The method may include: A development platform obtains platform indication information, service indication information, and parameter requirement information of a to-be-generated AI model. The platform indication information is used to indicate a running platform on which the to-be-generated AI model is run, the service indication information is used to indicate a first service to be executed by the to-be-generated AI model, and the parameter requirement information is used to indicate a requirement on a performance parameter of the to-be-generated AI model. The development platform selects, from an operator database, a plurality of available operators that correspond to the running platform and that are used to execute the first service. The development platform selects an operator from the plurality of available operators, and sets a parameter of the selected operator, to generate a first candidate policy. The development platform performs sample training on the first candidate policy to obtain a first candidate AI model. The development platform invokes a simulator component of the running platform to run the first candidate AI model to execute processing on test data of the first service, so as to obtain a first running parameter. If the first running parameter matches the parameter requirement information, the development platform determines that the first candidate AI model is a target AI model.

When the development platform generates the AI model, reference is made not only to the platform indication information but also to a requirement on a performance parameter for running the AI model by the running platform. Therefore, the AI model generated by the development platform satisfies a running environment of the running platform, and may be used to execute the first service, and a performance parameter meets a requirement on parameter requirement information when the first service is executed. In addition, the development platform may automatically generate, for different service requirements and different running environments, model code runnable on the running platform, and deploy the model code on the running platform.

With reference to the first aspect, in a possible design manner, after determining that the first candidate AI model is the target AI model, the development platform may generate, based on the first candidate AI model, model code runnable on the running platform. The development platform may send the model code to the running platform. In this way, the running platform can run the model code to execute the first service.

With reference to the first aspect, in another possible design manner, the AI model for executing the first service has a specific policy structure. The development platform adds a corresponding operator to the policy structure for the first service to obtain the first candidate policy. Specifically, the method for selecting, by the development platform from an operator database, a plurality of available operators that correspond to the running platform and that are used to execute the first service may include: The development platform determines a policy structure of the to-be-generated AI model based on the first service; and selects, from the operator database according to data processing logic, the plurality of available operators corresponding to the running platform. The policy structure is used to represent the data processing logic of the to-be-generated AI model, and the first candidate policy may be generated by adding the operator to the policy structure according to the data processing logic. The method for selecting, by the development platform, an operator from the plurality of available operators, and setting a parameter of the selected operator, to generate a first candidate policy may include: selecting the operator from the plurality of available operators, adding the selected operator to the policy structure, and setting the parameter of the selected operator, to generate the first candidate policy.

With reference to the first aspect, in another possible design manner, the parameter requirement information may include: at least one of: a requirement on power consumption for running the to-be-generated AI model by the running platform, a requirement on precision of processing data by running the to-be-generated AI model by the running platform, a requirement on a speed for processing data by running the to-be-generated AI model by the running platform, a requirement on storage space occupied by the to-be-generated AI model, and a requirement on storage space required by the running platform to run the to-be-generated AI model.

With reference to the first aspect, in another possible design manner, the first running parameter may not match the parameter requirement information. If the first running parameter does not match the parameter requirement information, the development platform may obtain first difference information. The first difference information is used to indicate a difference between the first running parameter and the parameter requirement information. Then, the development platform adjusts the operator in the first candidate policy based on the first difference information, to obtain a second candidate policy. The development platform performs sample training on the second candidate policy to obtain a second candidate AI model. The development platform invokes the simulator component to run the second candidate AI model, so as to obtain a second running parameter. If the second running parameter matches the parameter requirement information, the development platform determines that the second candidate AI model is the target AI model.

That the development platform determines whether the first running parameter matches the parameter requirement information may specifically include: The development platform determines whether power consumption for running the first candidate AI model by the simulator component of the running platform is less than or equal to power consumption required by the parameter requirement information, the development platform determines whether precision of processing data by the simulator component by running the first candidate AI model is higher than or equal to precision required by the parameter requirement information, the development platform determines whether a speed for processing data by the simulator component by running the first candidate AI model is higher than or equal to a speed required by the parameter requirement information, and/or the development platform determines whether storage space (that is, a running memory size used by the simulator component to run the first candidate AI model) occupied for running the first candidate AI model by the simulator component is less than or equal to a running memory size required by the parameter requirement information. The running memory required by the parameter requirement information is storage space occupied when the parameter requirement information requests the running platform to run the first candidate AI model.

If power consumption for running the first candidate AI model by the simulator component is less than or equal to power consumption required by the parameter requirement information, precision of processing the data by the simulator component by running the first candidate AI model is higher than or equal to precision required by the parameter requirement information, a speed for processing the data by the simulator component by running the first candidate AI model is higher than or equal to a speed required by the parameter requirement information, and storage space occupied for running the first candidate AI model by the simulator component is less than or equal to a running memory required by the parameter requirement information, it indicates that the first running parameter matches the parameter requirement information, and that the first candidate AI model meets a requirement of the parameter requirement information. If the first running parameter matches the parameter requirement information, and
the first running parameter does not meet any one of the following conditions: "power consumption for running the first candidate AI model by the simulator component is less than or equal to power consumption required by the parameter requirement information", "precision of processing the data by the simulator component by running the first candidate AI model is higher than or equal to precision required by the parameter requirement information", "a speed for processing the data by the simulator component by running the first candidate AI model is higher than or equal to a speed required by the parameter requirement information", and "storage space occupied for running the first candidate AI model by the simulator component is less than or equal to a running memory required by the parameter requirement information", it indicates that the first running parameter does not match the parameter requirement information.

If the first running parameter does not match the parameter requirement information, the development platform may obtain a difference (that is, the first difference information) between the first running parameter and the parameter requirement information, to adjust the first candidate policy based on the first difference information and generate a new candidate AI model, until the development platform obtains an AI model that meets a requirement of the parameter requirement information.

With reference to the first aspect, in another possible design manner, the development platform may modify an existing benchmark model, to generate an AI model that can be run on the running platform to execute the first service. Specifically, before generating the first candidate policy, the development platform may determine a benchmark model of the first service. The benchmark model is an AI model used to process the first service. In this case, the policy structure of the to-be-generated AI model is a policy structure of the benchmark model, and the policy structure is used to represent data processing logic of the benchmark model. The method for selecting, by the development platform, an operator from the plurality of available operators, and setting a parameter of the selected operator, to generate a first candidate policy may include: The development platform randomly selects an operator from the plurality of available operators based on the policy structure of the benchmark model; replaces, with the randomly selected operator, an operator that is in the benchmark model and that does not correspond to the running platform; and adjusts a parameter of each operator, to obtain the first candidate policy.

The development platform may randomly select the operator from the plurality of available operators based on the policy structure of the benchmark model; replaces, with the randomly selected operator, the operator that is in the benchmark model and that does not correspond to the running platform; and adjusts the parameter of each operator, to obtain the first candidate policy. The benchmark model is an AI model used to execute the first service. In other words, when the development platform generates the AI model, reference is made to the platform indication information. In addition, when the development platform generates the AI model, reference is further made to a requirement on a performance parameter for running the AI model by the running platform. Therefore, the AI model generated by the development platform meets the running environment of the running platform and may be used to execute the first service, and a performance parameter meets a requirement of the parameter requirement information when the first service is executed.

In addition, the development platform may automatically generate, for different service requirements and different running environments, model code runnable on the running platform, and deploy the model code on the running platform.

With reference to the first aspect, in another possible design manner, if the first running parameter does not match the parameter requirement information, when the development platform 210 adjusts the first candidate policy, reference may be made not only to the first difference information (that is, difference information between the first running parameter and the parameter requirement information), but also to difference information (that is, second difference information) between the first running parameter and a third running parameter obtained by executing processing on the test data of first service by the benchmark model. Specifically, if the first running parameter does not match the parameter requirement information, the development platform obtains the first difference information and the second difference information; the development platform adjusts the operator in the first candidate policy based on the first difference information and the second difference information, to obtain the second candidate policy; the development platform performs sample training on the second candidate policy to obtain a second candidate AI model; the development platform invokes a simulator component to run the second candidate AI model, to obtain the second running parameter; if the second running parameter matches the parameter requirement information, the development platform determines that the second candidate AI model is the target AI model.

With reference to the first aspect, in another possible design manner, the first candidate policy generated by the development platform may not meet a requirement of the foregoing parameter requirement information. For example, the parameter requirement information may include at least a requirement on storage space occupied by the to-be-generated AI model. The storage space to be occupied by the first candidate policy may be greater than storage space that the to-be-generated AI model is required to occupy in the parameter requirement information. After generating the first candidate policy, the development platform may compress the first candidate policy based on a compression algorithm, to obtain a compressed first candidate policy. Correspondingly, the development platform performs sample training on the compressed first candidate policy to obtain the first candidate AI model.

With reference to the first aspect, in another possible design manner, after generating the first candidate policy, the development platform may encode the first candidate policy to obtain a binary string of the first candidate policy. The development platform may perform sample training on the binary string of the first candidate policy to obtain the first candidate AI model.

With reference to the first aspect, in another possible design manner, the first candidate policy generated by the development platform may not meet a requirement of the foregoing parameter requirement information. For example, the parameter requirement information may include at least a requirement on storage space occupied by the to-be-generated AI model. Based on this, before performing sample training on the first candidate policy, the development platform may first determine whether the first candidate policy meets a preset condition. The preset condition includes: Storage space required by the first candidate policy meets the requirement on the storage space occupied by the to-be-generated AI model that is included in the parameter requirement information. That storage space required by the first candidate policy meets the requirement on the storage space occupied by the to-be-generated AI model that is included in the parameter requirement information specifically means that the storage space to be occupied by the first candidate policy is less than the storage space that the to-be-generated AI model is required to occupy in the parameter requirement information. The development platform may perform sample training on the first candidate policy that meets the preset condition, to obtain the first candidate AI model.

After generating the first candidate policy, the development platform first determines whether the first candidate policy meets the preset condition; and the development platform performs sample training on the first candidate policy that meets the preset condition, to obtain the first candidate AI model. In this way, a possibility that the development platform generates, based on a first candidate policy that does not meet the preset condition, a first candidate AI model that does not meet the requirement of the parameter requirement information can be reduced, and efficiency of generating, by the development platform, an AI model that meets a requirement can be improved.

According to a second aspect, an embodiment of this application provides a development platform. The development platform includes a processor, a memory, and a plurality of simulator components. The memory and the plurality of simulator components are coupled to the processor. The plurality of simulator components include a simulator component of a running platform. The memory is configured to store computer program code. The computer program code includes a computer instruction. When the processor executes the foregoing computer instruction, the processor is configured to: obtain platform indication information, service indication information, and parameter requirement information of a to-be-generated artificial intelligence AI model, where the platform indication information is used to indicate a running platform on which the to-be-generated AI model is run, the service indication information is used to indicate a first service to be executed by the to-be-generated AI model, and the parameter requirement information is used to indicate a requirement on a performance parameter of the to-be-generated AI model; select, from an operator database, a plurality of available operators that correspond to the running platform and that are used to execute the first service, where the operator database stores a plurality of operators used to generate an AI model; select an operator from the plurality of available operators, and set a parameter of the selected operator, to generate a first candidate policy, where the first candidate policy comprises a plurality of operators; and perform sample training on the first candidate policy to obtain a first candidate AI model. The processor is further configured to: invoke the simulator component of the running platform in the plurality of simulator components to run the first candidate AI model to execute processing on test data of the first service, so as to obtain a first running parameter; and if the first running parameter matches the parameter requirement information, determine that the first candidate AI model is a target AI model.

With reference to the second aspect, in a possible design manner, the processor is further configured to: after determining that the first candidate AI model is the target AI model, generate, based on the first candidate AI model, model code runnable on the running platform.

With reference to the second aspect, in another possible design manner, that the processor is configured to select, from an operator database, a plurality of available operators that correspond to the running platform and that are used to execute the first service includes: The processor is configured to: determine a policy structure of the to-be-generated AI model based on the first service, where the policy structure is used to represent data processing logic of the to-be-generated AI model; add an operator to the policy structure according to the data processing logic to generate the first candidate policy; and select, from the operator database according to the data processing logic, the plurality of available operators that correspond to the running platform. That the processor is configured to: select an operator from the plurality of available operators, and set a parameter of the selected operator, to generate a first candidate policy, includes: The processor is configured to: select the operator from the plurality of available operators, add the selected operator to the policy structure, and set the parameter of the selected operator, to generate the first candidate policy.

With reference to the second aspect, in another possible design manner, the processor is further configured to: obtain first difference information if the first running parameter does not match the parameter requirement information, where the first difference information is used to indicate a difference between the first running parameter and the parameter requirement information; adjust the operator in the first candidate policy based on the first difference information, to obtain a second candidate policy; and perform sample training on the second candidate policy to obtain a second candidate AI model. The processor is further configured to: invoke the simulator component of the running platform to run the second candidate Al model, so as to obtain a second running parameter; and if the second running parameter matches the parameter requirement information, determine that the second candidate AI model is the target AI model.

With reference to the second aspect, in another possible design manner, the processor is further configured to: before selecting the operator from the plurality of available operators, and setting the parameter of the selected operator, to generate the first candidate policy, determine a benchmark model of the first service. The benchmark model is an AI model used to process the first service, the policy structure of the to-be-generated AI model is a policy structure of the benchmark model, and the policy structure is used to represent data processing logic of the benchmark model. That the processor is configured to: select an operator from the plurality of available operators, and set a parameter of the selected operator, to generate a first candidate policy includes: The processor is configured to: randomly select an operator from the plurality of available operators based on the policy structure of the benchmark model; replace, with the randomly selected operator, an operator that is in the benchmark model and that does not correspond to the running platform; and adjust a parameter of each operator, to obtain the first candidate policy.

With reference to the second aspect, in another possible design manner, the processor is further configured to: obtain first difference information and second difference information if the first running parameter does not match the parameter requirement information, where the first difference information is used to indicate a difference between the first running parameter and the parameter requirement information, the second difference information is used to indicate a difference between the first running parameter and a third running parameter, and the third running parameter is a running parameter obtained by executing processing on the test data of the first service by the benchmark model; adjust the operator in the first candidate policy based on the first difference information and the second difference information, to obtain a second candidate policy; and perform sample training on the second candidate policy to obtain a second candidate AI model. The processor is further configured to: invoke the simulator component of the running platform to run the second candidate AI model, so as to obtain a second running parameter; and if the second running parameter matches the parameter requirement information, determine that the second candidate AI model is the target AI model.

With reference to the second aspect, in another possible design manner, the processor is further configured to: after generating the first candidate policy, compress the first candidate policy based on a compression algorithm, to obtain a compressed first candidate policy. That the processor is configured to perform sample training on the first candidate policy to obtain a first candidate AI model includes: The processor is configured to perform sample training on the compressed first candidate policy to obtain the first candidate AI model.

With reference to the second aspect, in another possible design manner, the processor is further configured to: after generating the first candidate policy, encode the first candidate policy to obtain a binary string of the first candidate policy. That the processor is configured to perform sample training on the first candidate policy to obtain a first candidate AI model includes: The processor is configured to perform sample training on the binary string of the first candidate policy to obtain the first candidate AI model.

With reference to the second aspect, in another possible design manner, the parameter requirement information includes at least one of: a requirement on power consumption for running the to-be-generated AI model by the running platform, a requirement on precision of processing data by running the to-be-generated AI model by the running platform, a requirement on a speed for processing data by running the to-be-generated AI model by the running platform, a requirement on storage space occupied by the to-be-generated AI model, and a requirement on storage space required by the running platform to run the to-be-generated AI model.

With reference to the second aspect, in another possible design manner, the parameter requirement information includes at least the requirement on the storage space occupied by the to-be-generated AI model. The processor is further configured to: before performing sample training on the first candidate policy to obtain the first candidate AI model, determine whether the first candidate policy meets a preset condition. The preset condition includes: Storage space required by the first candidate policy meets the requirement on the storage space occupied by the to-be-generated AI model that is included in the parameter requirement information. That the processor is configured to perform sample training on the first candidate policy to obtain a first candidate AI model includes: The processor is configured to: if the first candidate policy meets the preset condition, perform sample training on the first candidate policy to obtain the first candidate AI model.

According to a first example not encompassed by the claims, an example of this application provides a development platform. The development platform includes a constraint library, a policy generator, an artificial intelligence AI model generator, an evaluator, a code generator, and a plurality of simulator components. The constraint library is configured to provide platform indication information, service indication information, and parameter requirement information of a to-be-generated AI model. The platform indication information is used to indicate a running platform on which the to-be-generated AI model is run, the service indication information is used to indicate a first service to be executed by the to-be-generated AI model, and the parameter requirement information is used to indicate a requirement on a performance parameter of the to-be-generated AI model. The policy generator is configured to: select, from an operator database based on the platform indication information and the service indication information that are provided by the constraint library, a plurality of available operators that correspond to the running platform and that are used to execute the first service, where the operator database stores a plurality of operators used to generate an AI model; and select an operator from the plurality of available operators, and set a parameter of the selected operator, to generate a first candidate policy. The first candidate policy comprises a plurality of operators. The AI model generator is configured to perform sample training on the first candidate policy generated by the policy generator, to obtain a first candidate AI model. The evaluator is configured to: invoke the simulator component of the running platform to run the first candidate AI model generated by the AI model generator, to execute processing on test data of the first service, so as to obtain a first running parameter; and determine whether the first running parameter matches the parameter requirement information provided by the constraint library. The simulator component of the running platform is one of a plurality of simulator components. The code generator is configured to: if the evaluator determines that the first running parameter matches the parameter requirement information, generate, based on the first candidate AI model generated by the AI model generator, model code runnable on the running platform.

With reference to the first example, in a possible design manner, that the policy generator is configured to: select, from an operator database, a plurality of available operators that correspond to the running platform and that are used to execute the first service includes: The policy generator is configured to: determine a policy structure of the to-be-generated AI model based on the first service, where the policy structure is used to represent data processing logic of the to-be-generated AI model; and select, from the operator database according to the data processing logic, the plurality of available operators that correspond to the running platform. That the policy generator is configured to: select an operator from the plurality of available operators, and set a parameter of the selected operator, to generate a first candidate policy, where the first candidate policy comprises a plurality of operators, includes: The policy generator is configured to: select the operator from the plurality of available operators, add the selected operator to the policy structure, and set the parameter of the selected operator, to generate the first candidate policy.

With reference to the first example, in another possible design manner, the evaluator is further configured to obtain first difference information if the first running parameter does not match the parameter requirement information. The first difference information is used to indicate a difference between the first running parameter and the parameter requirement information. The policy generator is further configured to adjust the operator in the first candidate policy based on the first difference information, to obtain a second candidate policy. The AI model generator is further configured to perform sample training on the second candidate policy generated by the policy generator, to obtain a second candidate AI model. The evaluator is further configured to: invoke the simulator component of the running platform to run the second candidate AI model generated by the AI model generator, to obtain a second running parameter; and determine whether the second running parameter matches the parameter requirement information. The simulator component of the running platform is one of a plurality of simulator components. The code generator is further configured to: if the evaluator determines that the second running parameter matches the parameter requirement information, generate, based on the second candidate AI model generated by the AI model generator, model code runnable on the running platform.

With reference to the first example, in another possible design manner, the policy generator is configured to: before selecting the operator from the plurality of available operators, and setting the parameter of the selected operator, to generate the first candidate policy, select a benchmark model of the first service from a benchmark model database. The benchmark model is an AI model used to process the first service, the policy structure of the to-be-generated AI model is a policy structure of the benchmark model, and the policy structure is used to represent data processing logic of the benchmark model; and the benchmark model database stores a plurality of AI models. That the policy generator is configured to: select an operator from the plurality of available operators, and set a parameter of the selected operator, to generate a first candidate policy includes: The policy generator is configured to: randomly select an operator from the plurality of available operators based on the policy structure of the benchmark model; replace, with the randomly selected operator, an operator that is in the benchmark model and that does not correspond to the running platform; and adjust a parameter of each operator, to obtain the first candidate policy.

With reference to the first example, in another possible design manner, the evaluator is further configured to obtain first difference information and second difference information if the first running parameter does not match the parameter requirement information. The first difference information is used to indicate a difference between the first running parameter and the parameter requirement information, the second difference information is used to indicate a difference between the first running parameter and a third running parameter, and the third running parameter is a running parameter obtained by executing processing on the test data of the first service by the benchmark model. The policy generator is further configured to adjust the operator in the first candidate policy based on the first difference information and the second difference information, to obtain a second candidate policy. The AI model generator is further configured to perform sample training on the second candidate policy generated by the policy generator, to obtain a second candidate AI model. The evaluator is further configured to: invoke the simulator component of the running platform to run the second candidate AI model generated by the AI model generator, to obtain a second running parameter; and determine whether the second running parameter matches the parameter requirement information. The simulator component of the running platform is one of a plurality of simulator components. The code generator is further configured to: if the evaluator determines that the second running parameter matches the parameter requirement information, generate, based on the second candidate AI model generated by the AI model generator, model code runnable on the running platform.

With reference to the first example, in another possible design manner, the policy generator is further configured to: after generating the first candidate policy, compress the first candidate policy based on a compression algorithm, to obtain a compressed first candidate policy. The AI model generator is configured to perform sample training on the first candidate policy compressed by the policy generator, to obtain the first candidate AI model.

With reference to the first example, in another possible design manner, the policy generator is further configured to: after generating the first candidate policy, encode the first candidate policy to obtain a binary string of the first candidate policy. The AI model generator is configured to perform sample training on the binary string of the first candidate policy to obtain the first candidate AI model.

With reference to the first example, in another possible design manner, the parameter requirement information includes at least one of: a requirement on power consumption for running the to-be-generated AI model by the running platform, a requirement on precision of processing data by running the to-be-generated AI model by the running platform, a requirement on a speed for processing data by running the to-be-generated AI model by the running platform, a requirement on storage space occupied by the to-be-generated AI model, and a requirement on storage space required by the running platform to run the to-be-generated AI model.

With reference to the first example, in another possible design manner, the parameter requirement information includes at least the requirement on the storage space occupied by the to-be-generated AI model. The AI model generator is further configured to: before performing sample training on the first candidate policy to obtain the first candidate AI model, determine whether the first candidate policy meets a preset condition. The preset condition includes: Storage space required by the first candidate policy meets the requirement on the storage space occupied by the to-be-generated AI model that is included in the parameter requirement information. That the AI model generator is configured to perform sample training on the first candidate policy to obtain a first candidate AI model includes: The AI model generator is configured to: if the first candidate policy meets the preset condition, perform sample training on the first candidate policy to obtain the first candidate AI model.

According to a second example not encompassed by the claims, an example of this application provides a computer storage medium. The computer storage medium includes a computer instruction. When the computer instruction is run on a development platform, the development platform is enabled to perform the AI model development method according to any one of the first aspect and the possible design manners of the first aspect.

According to a third example not encompassed by the claims, an example of this application provides a computer program product. When the computer program product is run on a computer, the computer is enabled to perform the AI model development method according to any one of the first aspect and the possible design manners of the first aspect.

In addition, for technical effects brought by the development platform according to any one of the second aspect, the first example, the designs of the second aspect, or the designs of the first example, technical effects brought by the computer storage medium according to the second example, and technical effects brought by the computer program product according to the third example, refer to the technical effects brought by the first aspect and the different designs of the first aspect. Details are not described herein again.

### BRIEF DESCRIPTION OF DRAWINGS

FIG. 1 is a schematic structural diagram of hardware of an electronic device according to an embodiment of this application;
FIG. 2 is a schematic structural diagram of a system network structure to which an AI model development method is applied according to an embodiment of this application;
FIG. 3A and FIG. 3B are a flowchart 1 of an AI model development method according to an embodiment of this application;
FIG. 4 is a schematic diagram of an example of a policy structure according to an embodiment of this application;
FIG. 5 is a schematic diagram 1 of an example of a first candidate policy according to an embodiment of this application;
FIG. 6 is a schematic diagram 2 of an example of a first candidate policy according to an embodiment of this application;
FIG. 7 is a schematic diagram 1 of a principle of an AI model development method according to an embodiment of this application;

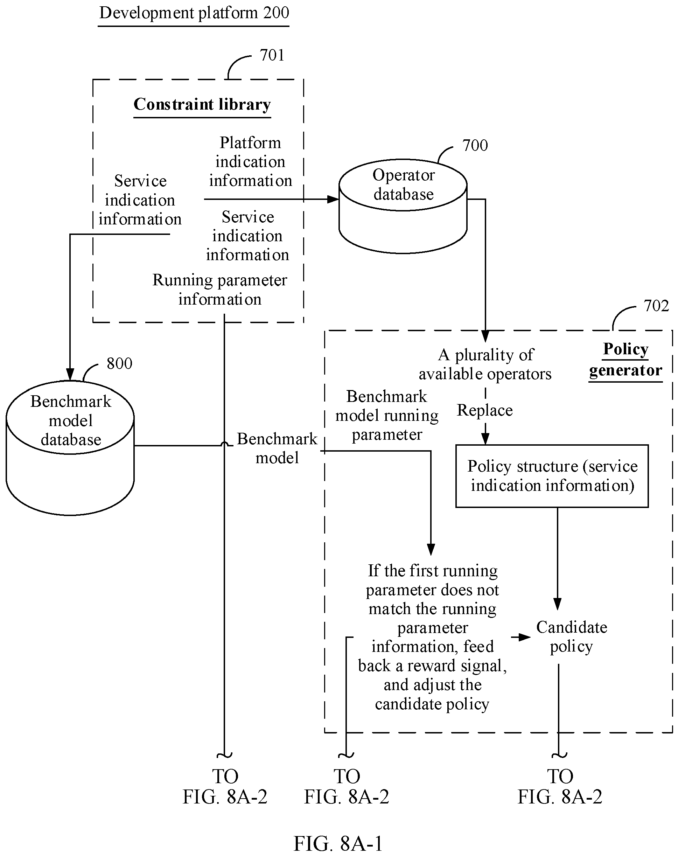

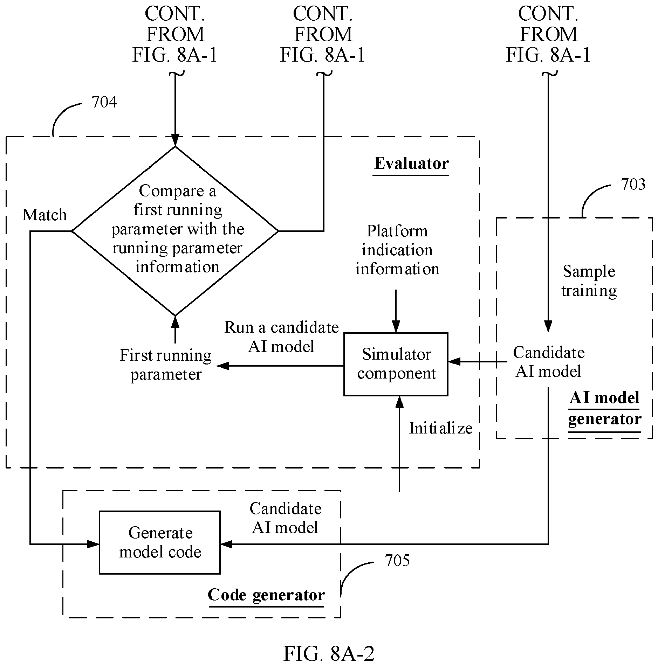

FIG. 8A-1 and FIG. 8A-2 are a schematic diagram 2 of a principle of an AI model development method according to an embodiment of this application;

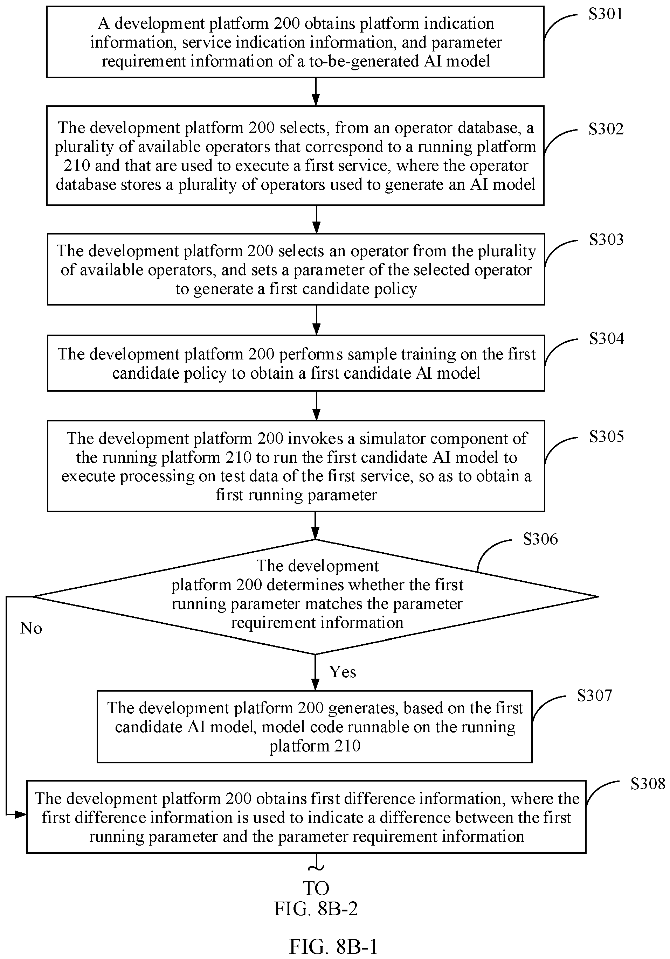

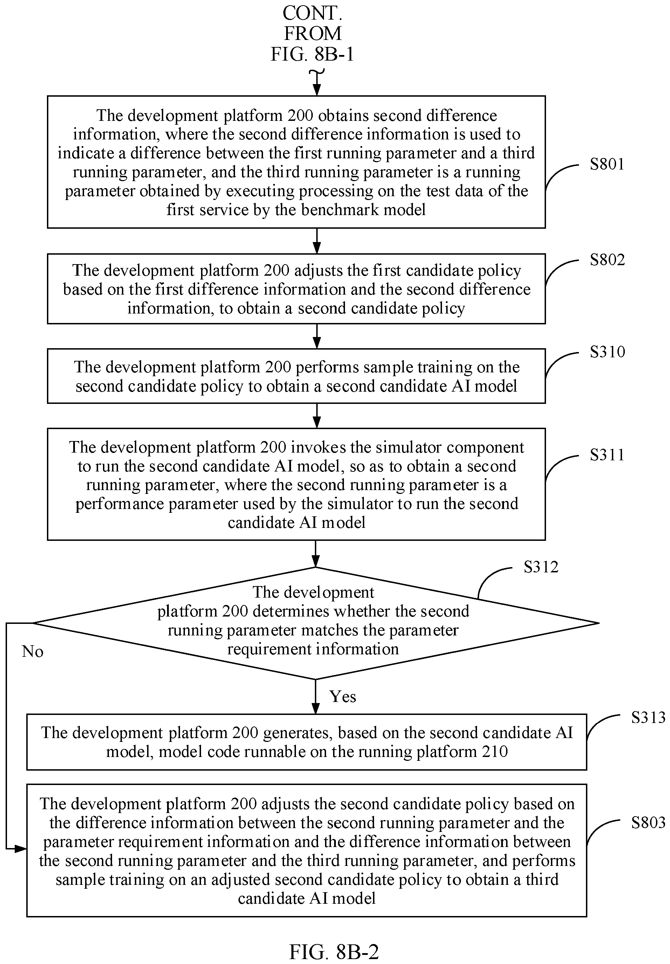

FIG. 8B-1 and FIG. 8B-2 are a flowchart 2 of an AI model development method according to an embodiment of this application;

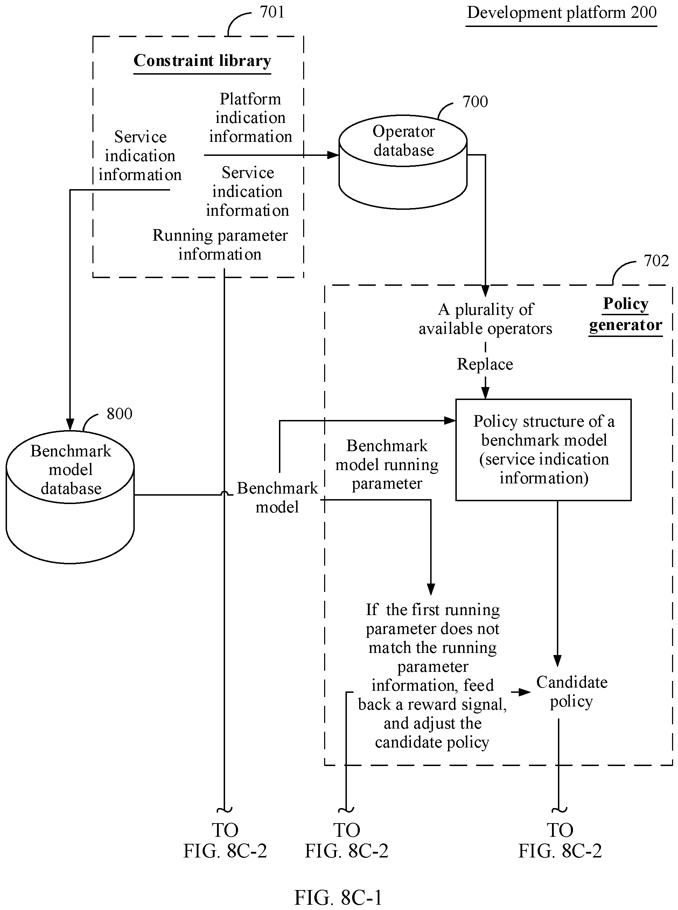

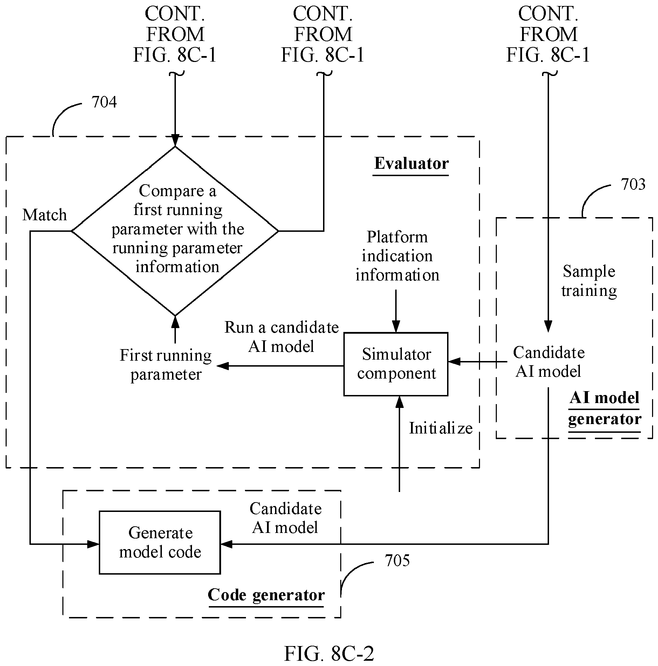

FIG. 8C-1 and FIG. 8C-2 are a schematic diagram 3 of a principle of an AI model development method according to an embodiment of this application;

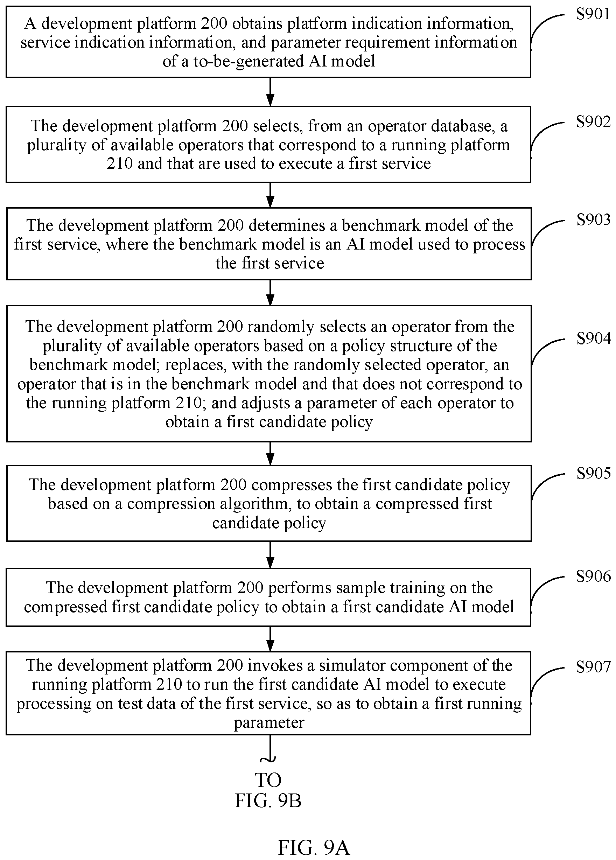

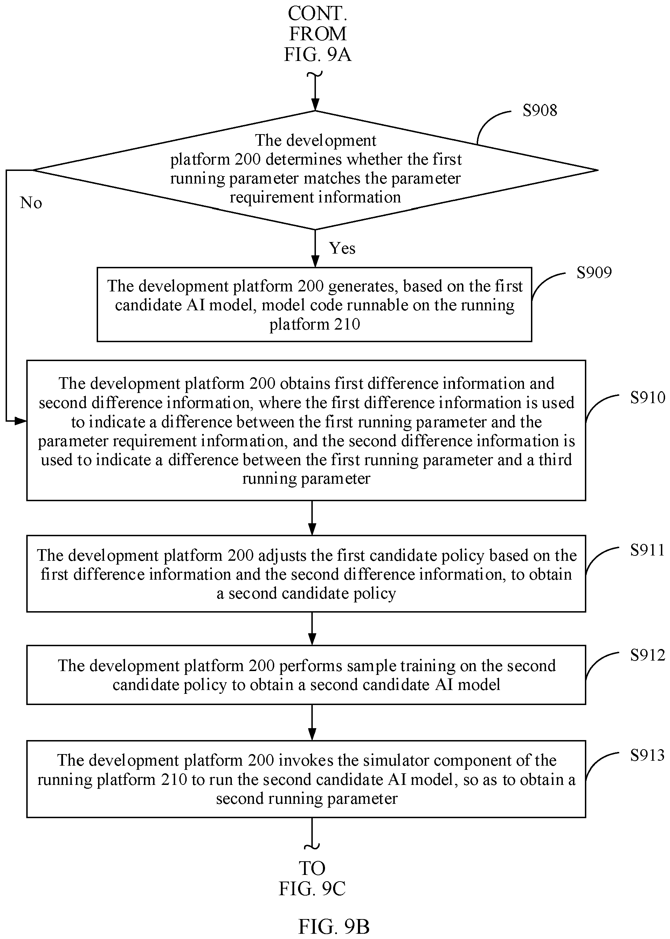

FIG. 9A to FIG. 9C are a flowchart 3 of an AI model development method according to an embodiment of this application;

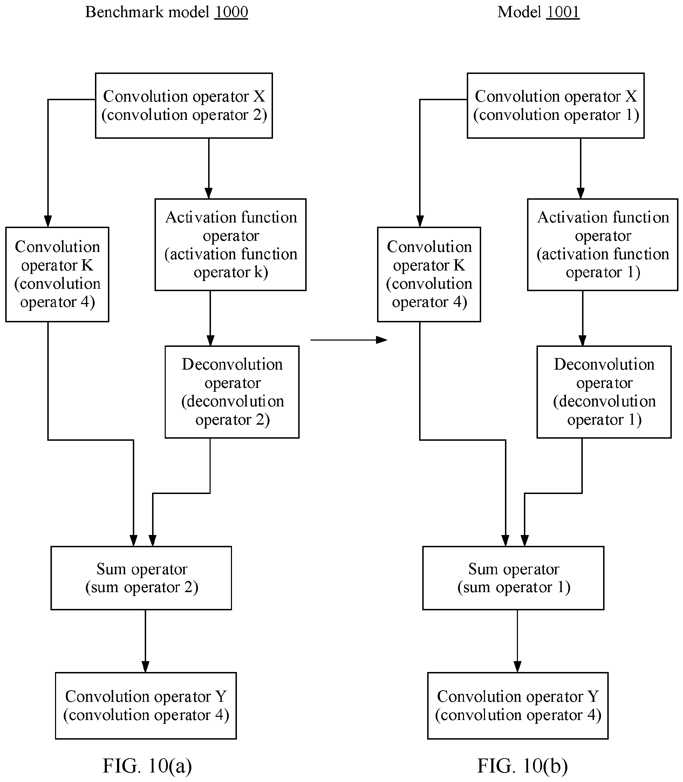

FIG. 10(a) and FIG. 10(b) are a schematic diagram of an example of a benchmark model according to an embodiment of this application;

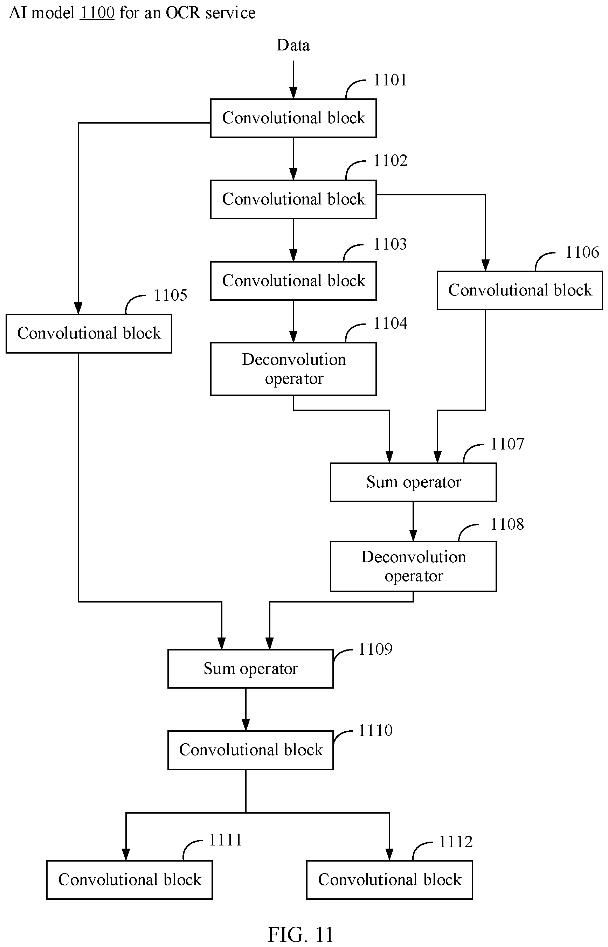

FIG. 11 is a schematic diagram of an example of an AI model specific for an OCR service according to an embodiment of this application;

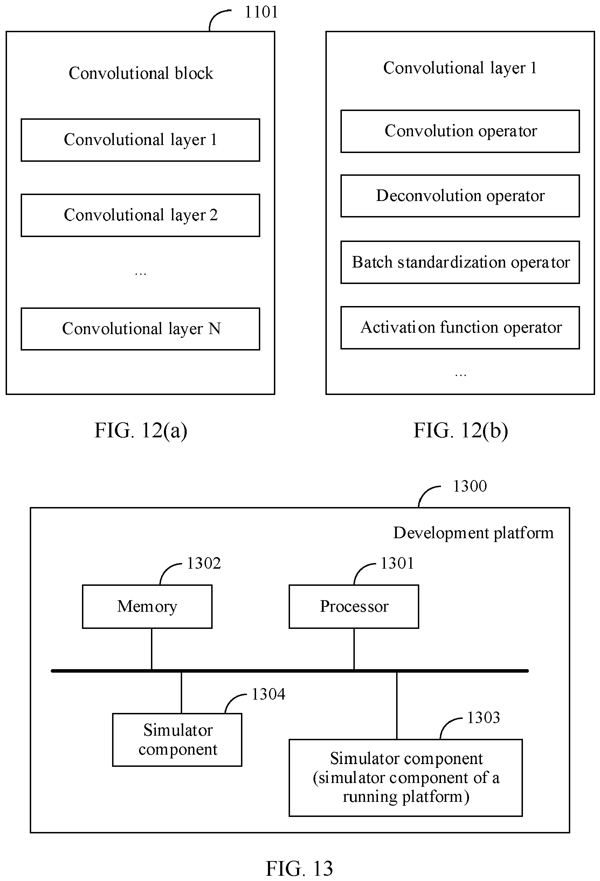

FIG. 12(a) and FIG. 12(b) is a schematic structural diagram of an example of a convolutional block and a convolutional layer in the AI model specific for the OCR service shown in FIG. 11; and
FIG. 13 is a schematic structural diagram of composition of a development platform according to an embodiment of this application.

### DESCRIPTION OF EMBODIMENTS

The embodiments of this application provide an AI model development method applicable to an AI model development process. Specifically, a development platform may generate an AI model based on indication information (that is, platform indication information) of a running platform of a to-be-generated AI model, a service to be processed by the AI model, and a requirement on a performance parameter used by the running platform to run the AI model. Then, the development platform may generate, based on the generated AI model with reference to the indication information of the running platform, model code runnable on the running platform. The development platform can deliver the model code to the running platform (that is, a terminal), to deploy the model code on the running platform. In this case, the running platform can execute the model code to run the AI model.

When the development platform generates the AI model, reference is made not only to indication information of a running platform on which the AI model is to be run, but also to a requirement on a performance parameter used for the running platform to run the AI model. Therefore, the AI model generated by the development platform satisfies a running environment and a performance requirement of the running platform (that is, the terminal). In addition, in the embodiments of this application, the development platform may automatically generate, for different service requirements and different running environments, model code runnable on the running platform, and deploy the model code on the running platform.

For example, the development platform in the embodiments of this application may be a device that has comparatively strong computing and storage capabilities, such as a personal computer (personal computer, PC), a notebook computer, or a cloud server. The running platform in the embodiments of this application may be a portable computer (such as a mobile phone), a notebook computer, a PC, a wearable electronic device (such as a smartwatch), a tablet computer, an augmented reality (augmented reality, AR) device\a virtual reality (virtual reality, VR) device, an in-vehicle computer, or the like. A specific form of the terminal is not specially limited in the following embodiments.

It should be noted that the development platform is configured with a simulator component of the running platform. After generating an AI model, the development platform may simulate running of the AI model on the simulator component of the running platform, to obtain a performance parameter used for the simulator component to run the Al model. In this way, the development platform can determine whether the obtained performance parameter meets a requirement on the performance parameter used for the running platform to run the AI model.

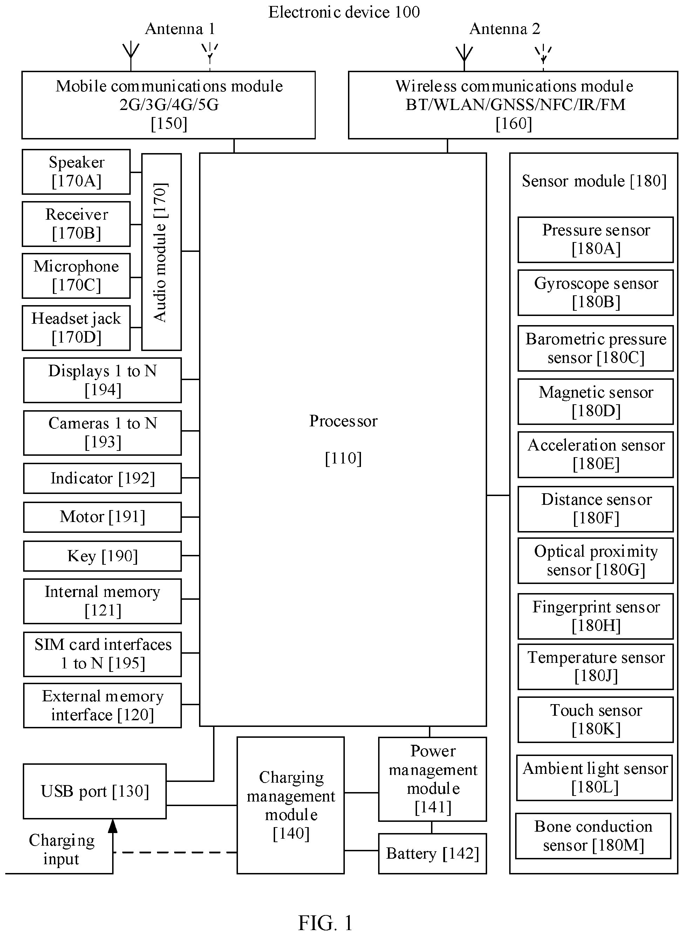

FIG. 1 is a schematic structural diagram of a running platform according to an embodiment of this application. The running platform may be an electronic device 100 shown in FIG. 1. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a key 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that a structure shown in this embodiment of this application does not constitute a specific limitation to the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural processing unit (neural processing unit, NPU). Different processing units may be independent devices, or may be integrated into one or more processors.

The controller may be a nerve center and a command center of the electronic device 100. The controller may generate an operation control signal based on instruction operation code and a time sequence signal, to complete control of instruction reading and instruction execution.

A memory may be further disposed in the processor 110, and is configured to store an instruction and data. In some embodiments, the memory in the processor 110 is a cache. The memory may store an instruction or data that has been used or cyclically used by the processor 110. If the processor 110 needs to use the instruction or the data again, the processor 110 may directly invoke the instruction or the data from the memory, to avoid repeated access and reduce a waiting time of the processor 110, thereby improving efficiency of a system.

In some embodiments, the processor 110 may include one or more interfaces. The interfaces may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules that is shown in this embodiment of the present invention is merely an example for description, and does not constitute a limitation to the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from a charger. The charger may be a wireless charger or a wired charger. In some embodiments of wired charging, the charging management module 140 may receive a charging input from a wired charger through a USB interface 130. In some embodiments of wireless charging, the charging management module 140 may receive a wireless charging input through a wireless charging coil of the electronic device 100. The charging management module 140 may further supply power to the electronic device through the power management module 141 while charging the battery 142.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communications module 160, and the like.

A wireless communication function of the electronic device 100 may be implemented through the antenna 1, the antenna 2, the mobile communications module 150, the wireless communications module 160, the modem processor, the baseband processor, and the like. The antenna 1 and the antenna 2 are configured to transmit and receive an electromagnetic wave signal. Each antenna in the electronic device 100 may be configured to cover one or more communications frequency bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communications module 150 can provide a wireless communication solution that is applied to the electronic device 100 and that includes 2G, 3G, 4G, 5G, and the like. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit the electromagnetic wave to the modem processor for demodulation. The mobile communications module 150 may further amplify a signal modulated by the modem processor, and convert an amplified signal into an electromagnetic wave for radiation through the antenna 1. In some embodiments, at least some function modules of the mobile communications module 150 may be disposed in the processor 110. In some embodiments, at least some function modules of the mobile communications module 150 may be disposed in a same device as at least some modules of the processor 110.

The modem processor may include a modulator and a demodulator. In some embodiments, the modem processor may be an independent device. In some other embodiments, the modem processor may be independent of the processor 110, and is disposed in a same device as the mobile communications module 150 or another function module.

The wireless communications module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communications module 160 may be one or more components integrating at least one communications processor module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert an amplified signal into an electromagnetic wave for radiation through the antenna 2.

In some embodiments, the antenna 1 and the mobile communications module 150 of the electronic device 100 are coupled, and the antenna 2 and the wireless communications module 160 of the electronic device 100 are coupled, so that the electronic device 100 can communicate with a network and another device based on a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a Beidou navigation satellite system (Beidou navigation satellite system, BDS), a quasi-zenith satellite system (quasi-zenith satellite system, QZSS), and/or a satellite-based augmentation system (satellite based augmentation system, SBAS).

The electronic device 100 implements a display function by using the GPU, the display 194, the application processor, and the like. The GPU is a microprocessor for image processing, and connects the display 194 and the application processor. The GPU is configured to: perform mathematical and geometric calculation, and render an image. The processor 110 may include one or more GPUs, and execute a program instruction to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diodes, QLED), or the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is opened, light is transmitted to a light-sensitive element of the camera through a lens, and an optical signal is converted into an electrical signal. The light-sensitive element of the camera transmits the electrical signal to the ISP for processing, and converts a processed signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected to the light-sensitive element. The light-sensitive element may be a charge-coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The NPU is a neural-network (Neural-Network, NN) computing processor, quickly processes input information with reference to a structure of a biological neural network, for example, with reference to a mode of transmission between human brain neurons, and may further continuously perform self-learning. The NPU can implement applications such as intelligent cognition of the electronic device 100, for example, image recognition, facial recognition, speech recognition, and text understanding. For example, the NPU can run model code of an AI model in the embodiments of this application, to perform services such as image recognition, facial recognition, speech recognition, and text understanding.

The external memory interface 120 may be configured to connect to an external memory card, for example, a micro SD card, to extend a storage capability of the electronic device 100. The external memory card communicates with the processor 110 through the external memory interface 120, to implement a data storage function. For example, a music file, a video file, or another file is stored in the external memory card.

The internal memory 121 may be configured to store computer-executable program code. The executable program code includes an instruction. The processor 110 runs the instruction stored in the internal memory 121 to perform various function applications of the electronic device 100 and process data. The internal memory 121 may include a program storage area and a data storage area. The program storage area may store an operating system, an application required by at least one function (for example, a sound playing function or an image playing function), and the like. The data storage area may store data (such as audio data and an address book) created during use of the electronic device 100, and the like. In addition, the internal memory 121 may include a high-speed random access memory, and may further include a nonvolatile memory, for example, at least one magnetic disk storage device, a flash storage device, or a universal flash storage (universal flash storage, UFS). For example, the memory (for example, the internal memory 121) may be configured to store model code of an AI model.

The electronic device 100 can implement an audio function such as music playing or recording by using the audio module 170, the speaker 170A, the receiver 170B, the microphone 170C, the headset jack 170D, the application processor, and the like. The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some function modules of the audio module 170 are disposed in the processor 110.

The key 190 includes a power key, a volume key, and the like. The key 190 may be a mechanical key, or may be a touch key. The electronic device 100 may receive a key input, and generate a key signal input related to user settings and function control of the electronic device 100.

The motor 191 may generate a vibration prompt. The motor 191 may be configured to provide a vibration prompt for an incoming call and a touch vibration feedback. The indicator 192 may be an indicator light; and may be configured to indicate a charging status and a power change, or may be configured to indicate a message, a missed call, a notification, and the like.

The SIM card interface 195 is configured to connect to a SIM card. The SIM card may be inserted into the SIM card interface 195 or plugged out of the SIM card interface 195, to implement contact with or separation from the electronic device 100. The electronic device 100 may support one or N SIM card interfaces, where N is a positive integer greater than 1. The SIM card interface 195 may support a nano SIM card, a micro SIM card, a SIM card, and the like. A plurality of cards may be inserted into a same SIM card interface 195 at the same time. The plurality of cards may be of a same type or different types. The SIM card interface 195 may be further compatible with different types of SIM cards. The SIM card interface 195 may be further compatible with an external memory card. The electronic device 100 interacts with a network by using the SIM card, to implement a call function, a data communication function, and the like. In some embodiments, the electronic device 100 uses an eSIM card, that is, an embedded SIM card. The eSIM card may be embedded into the electronic device 100, and cannot be separated from the electronic device 100.

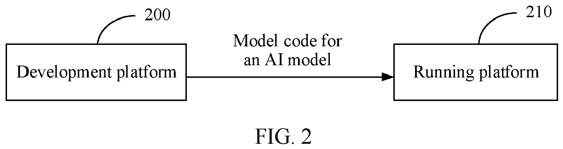

FIG. 2 is a schematic diagram of a system architecture consisting of a development platform and a running platform according to an embodiment of this application. As shown in FIG. 2, the system includes a development platform 200 and a running platform 210. The development platform 200 can perform the AI model development method provided in the embodiments of this application, to generate model code of an AI model. The development platform 200 may transmit the generated model code to the running platform 210. In this case, the running platform 210 can execute the model code to run the AI model.

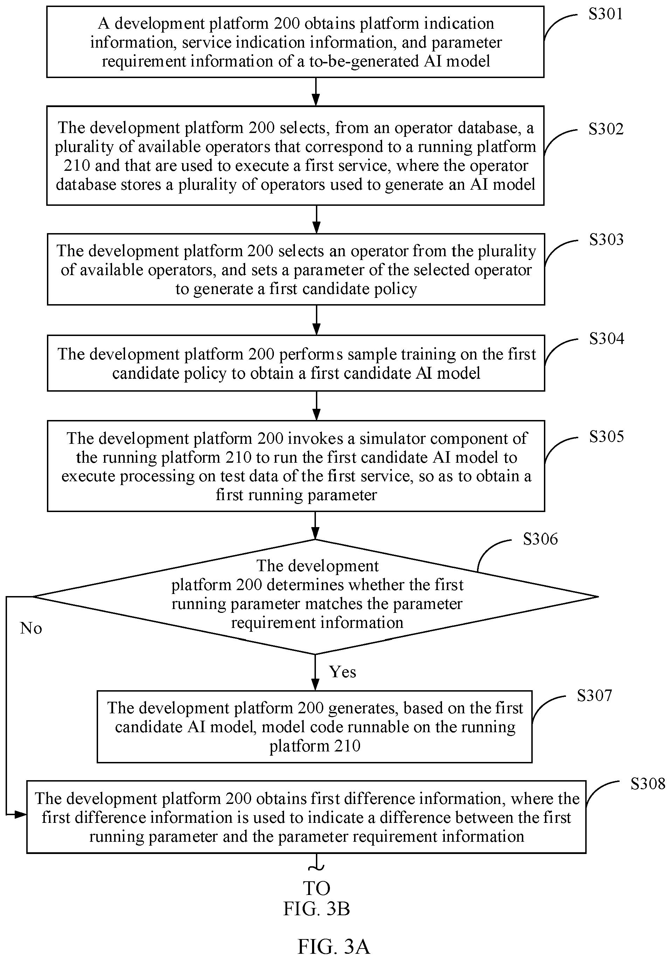

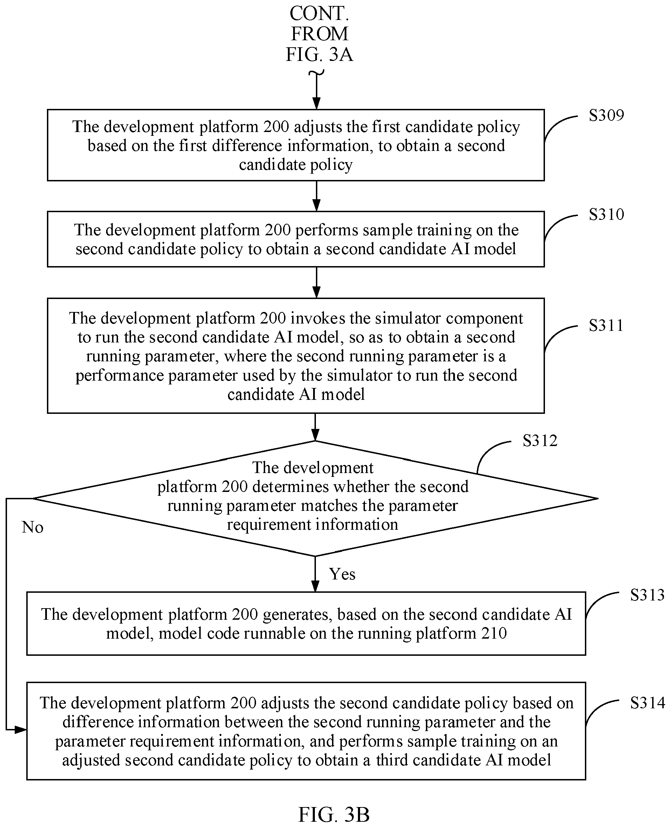

An embodiment of this application provides an AI model development method applied to the development platform 200 shown in FIG. 2. As shown in FIG. 3A and FIG. 3B, the AI model development method may include the following steps.

S301: The development platform 200 obtains platform indication information, service indication information, and parameter requirement information of a to-be-generated AI model.

The platform indication information is used to indicate a running platform 210 on which the to-be-generated AI model is run. The platform indication information may be an identifier of the running platform 210 on which the to-be-generated AI model is run. For example, the platform indication information may indicate that the running platform 210 on which the to-be-generated AI model is run is a Huawei Mate 10. The platform indication information may be an identifier of the Huawei Mate 10.

The service indication information is used to indicate services to be executed by the to-be-generated AI model. The services in this embodiment of this application may include text recognition, image recognition, natural language processing, and the like. For example, the text recognition may be optical character recognition (optical character recognition, OCR), and the image recognition may be face recognition.

The parameter requirement information is used to indicate a requirement on a performance parameter used for the running platform 210 to run the to-be-generated AI model. For example, the parameter requirement information may include at least one of: a requirement on power consumption for running the to-be-generated AI model by the running platform 210, a requirement on precision of processing data by running the to-be-generated AI model by the running platform 210, a requirement on a speed for processing data by running the to-be-generated AI model by the running platform 210, a requirement on storage space occupied by the to-be-generated AI model, and a requirement on storage space required by the running platform 210 to run the to-be-generated AI model.

In an implementation, the development platform 200 may provide a setting interface for a developer to set the platform indication information, the service indication information, and the parameter requirement information. The setting interface is displayed on the development platform 200. The setting interface may include a plurality of setting options, for example, a running-platform setting option, a service setting option, a power-consumption setting option, a precision setting option, a speed setting option, and a storage space setting option. The running-platform setting option is used to set the running platform on which the to-be-generated AI model is run. The service setting option is used to set a service to be processed by the to-be-generated AI model. The power-consumption setting option is used to set a requirement on power consumption for running the to-be-generated AI model by the running platform. The precision setting option is used to set a requirement on precision of processing data by running the to-be-generated AI model by the running platform. The speed setting option is used to set a requirement on a speed for processing data by running the to-be-generated AI model by the running platform. The storage-space setting option is used to set a requirement on storage space occupied for running the to-be-generated AI model by the running platform. The development platform 200 may receive a setting operation performed by a user on each setting option through the setting interface, to obtain the platform indication information, the service indication information, and the parameter requirement information.

In another implementation, the development platform 200 may receive platform indication information, service indication information, and parameter requirement information that are sent by another device (for example, the running platform 210).

S302: The development platform 200 selects, from an operator database, a plurality of available operators that correspond to the running platform 210 and that are used to execute a first service. The operator database stores a plurality of operators used to generate an AI model.

For example, the operator database may store a plurality of operators based on operator types. Based on the operator types, the plurality of operators can be classified into a convolution (Convolution) operator, a deconvolution (deConv) operator, a sum (Sum) operator, a batch normalization (Batch Normalization) operator, a scaling (scale) operator, an activation function (ReLu/Sigmoid) operator, and the like. The operators in this embodiment of this application include but are not limited to the convolution operator, the deconvolution operator, the sum operator, the batch standardization operator, the scale change operator, and the activation function operator. The operator database may include operators used to generate various AI models.

For example, the operator database may store a plurality of operators by using an operator information table shown in Table 1.

**Table 1**

| Operator Information Table | | |
|---|---|---|
| Operator Type | Operator | Running Platform |
| Convolution operator | Convolution operator 1 | Running platform 210 |
| | | Running platform b |
| | Convolution operator 2 | Running platform a |
| | | Running platform c |
| | Convolution operator 3 | Running platform c |
| | Convolution operator 4 | Running platform 210 |
| | ... | ... |
| | Convolution operator m | Running platform m |
| Deconvolution operator | Deconvolution operator 1 | Running platform 210 |
| | | Running platform c |
| | Deconvolution operator 2 | Running platform c |
| | ... | ... |
| | Deconvolution operator n | Running platform 210 |
| Sum operator | Sum operator 1 | Running platform 210 |
| | | Running platform b |
| | Sum operator 2 | Running platform b |
| | Sum operator 3 | Running platform 210 |
| | ... | ... |
| | Sum operator p | Running platform e |
| Batch standardization operator | Batch standardization operator 1 | Running platform b |
| | Batch standardization operator | Running platform 210 |
| | 2 | |
| | ... | |
| | Batch standardization operator q | Running platform c |
| Scaling operator | Scaling operator 1 | Running platform b |
| | | Running platform c |
| | ... | ... |
| | Scaling operator h | Running platform 210 |
| ... | ... | ... |
| Activation function operator | Activation function operator 1 | Running platform 210 |
| | | Running platform c |
| | Activation function operator 2 | Running platform c |
| | ... | ... |
| | Activation function operator k | Running platform d |

As shown in Table 1, a plurality of types of operators such as the convolution operator, the deconvolution operator, the sum operator, the batch standardization operator, the scaling operator, and the activation function operator may be stored in the operator database. In addition, for each type of operators, a plurality of operators that can be run on different running platforms are stored in the operator database. For example, as shown in Table 1, for the convolution operator, the convolution operator 1 and a convolution operator 4 that can be run on the running platform 210, the convolution operator 1 that can be run on the running platform b, the convolution operator 2 and the convolution operator 3 that can be run on the running platform c, and the like are stored in the operator database.

It should be noted that the operator database in this embodiment of this application may be stored in the development platform 200. Alternatively, the operator database may be stored in a cloud server. The development platform 200 may read data from the operator database in the cloud server, to select a plurality of available operators from the operator database.

For example, a running platform indicated by the platform indication information is the running platform 210, and the first service indicated by the service indication information is a service a. Refer to an available-operator table shown in Table 2. As shown in Table 2, it is assumed that available operators used to execute the service a include a convolution operator, a deconvolution operator, a sum operator, and an activation function operator. It can be learned from Table 1 that, as shown in Table 2, a convolution operator corresponding to the running platform 210 in the operator database includes the convolution operator 1 and the convolution operator 4, that is, the convolution operator 1 and the convolution operator 4 may be run on the running platform 210; a deconvolution operator corresponding to the running platform 210 in the operator database includes the deconvolution operator 1 and the deconvolution operator n, that is, the deconvolution operator 1 and the deconvolution operator n may run be on the running platform 210; a sum operator corresponding to the running platform 210 in the operator database includes the sum operator 1 and the sum operator 3, that is, the sum operator 1 and the sum operator 3 may be run on the running platform 210; and an activation function operator corresponding to the running platform 210 in the operator database includes the activation function operator 1, that is, the activation function operator 1 may be run on the running platform 210.

**Table 2**

| Table of Available Operators for a Service a | |
|---|---|
| Convolution operator | Convolution operator 1 |
| | Convolution operator 4 |
| Deconvolution operator | Deconvolution operator 1 |
| | Deconvolution operator n |
| Sum operator | Sum operator 1 |
| | Sum operator 3 |
| Activation function operator | Activation function operator 1 |

A specific policy structure is provided for an AI model for executing each service. For example, it is assumed that the service indication information is used to indicate that a service to be processed by the to-be-generated AI model is the service a. After determining the service a based on the service indication information, the development platform 200 can determine a policy structure of the AI model for executing the service a, that is, the policy structure of the to-be-generated AI model. The policy structure of the AI model may represent data processing logic used when the AI model executes a service.

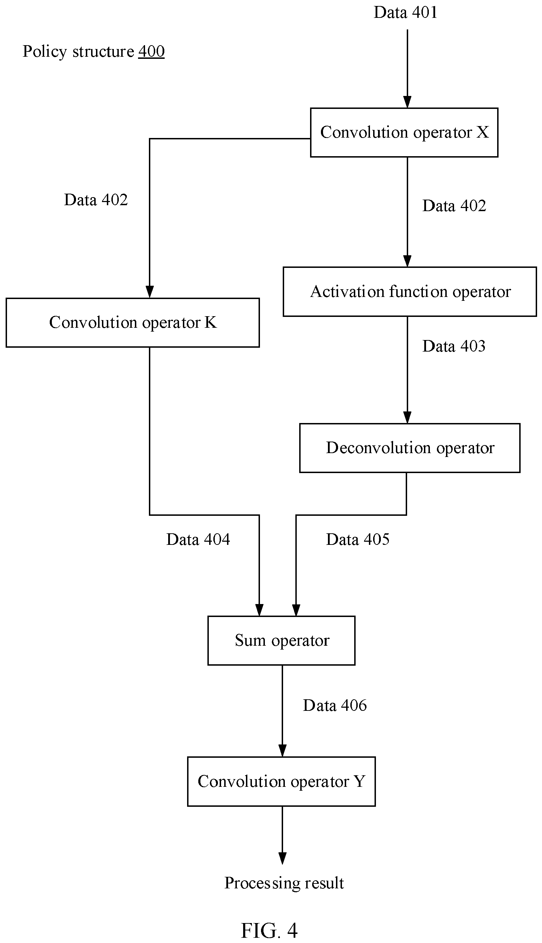

FIG. 4 is a schematic diagram of an example of the policy structure of the AI model for executing the service a. The policy structure 400 shown in FIG. 4 comprises convolution operators, a deconvolution operator, a sum operator, and an activation function operator. Logic, represented by the policy structure 400 shown in FIG. 4, of processing data by the AI model is as follows: A convolution operator (a convolution operator X) processes data 401 (to-be-processed data) and outputs data 402. Another convolution operator (a convolution operator K) processes the data 402 and outputs data 404. The activation function operator processes the data 402 to obtain data 403. The deconvolution operator processes the data 403 to obtain data 405. The sum operator processes the data 404 and the data 405 to obtain data 406. Another convolution operator (a convolution operator Y) processes the data 406 to obtain a processing result.

After determining the policy structure of the AI model for executing the first service (for example, the service a), the development platform 200 may select, from the operator database based on the data processing logic represented by the policy structure, a plurality of available operators corresponding to the running platform 210. For example, after determining that the policy structure of the AI model of the service a is the policy structure 400 shown in FIG. 4, the development platform 200 can determine that the policy structure 400 shown in FIG. 4 comprises the convolution operators, the deconvolution operator, the sum operator, and the activation function operator. Then the development platform may select, from the operator database, the plurality of convolution operators, the deconvolution operator, the sum operator, and the activation function operator that correspond to the running platform 210. For example, the development platform 200 may select, from the plurality of operators shown in Table 1, a plurality of available operators shown in Table 2.

S303: The development platform 200 selects an operator from the plurality of available operators, and sets a parameter of the selected operator, to generate a first candidate policy.

The first candidate policy comprises a plurality of operators. The first candidate policy is used to represent data processing logic of the to-be-generated AI model.

The development platform 200 may determine the policy structure of the AI model for executing the first service. Then the development platform 200 may randomly select an operator from the plurality of available operators, add the selected operator to the policy structure, and set a parameter of the selected operator, to obtain the first candidate policy. The development platform 200 selects the operator from the plurality of available operators based on the platform indication information, and sets the parameter of the selected operator, to generate one or more first candidate policies.

With reference to the foregoing example, the development platform 200 may randomly select the operator from the available operators shown in Table 2, and add the selected operator to the policy structure 400 shown in FIG. 4.

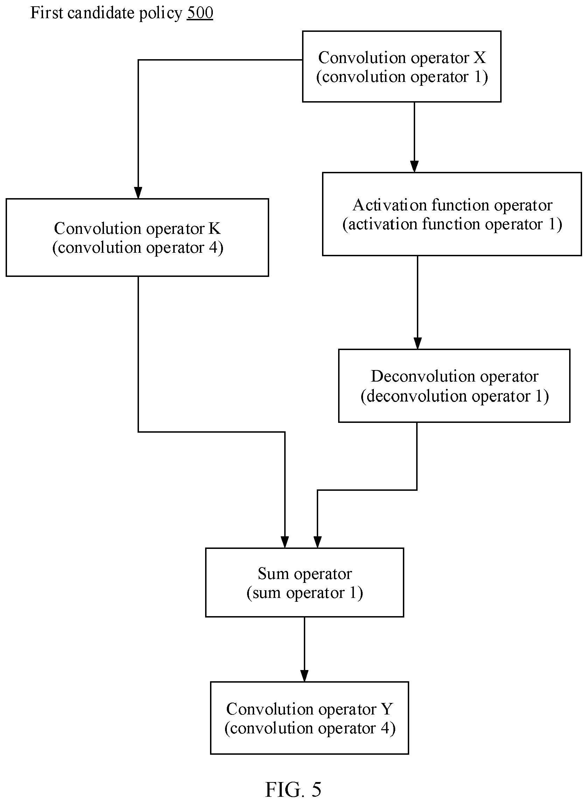

For example, the development platform 200 may randomly select the convolution operator 1 from Table 2 and add the convolution operator 1 to the convolution operator X shown in FIG. 4, select the convolution operator 4 from Table 2 and add the convolution operator 4 to the convolution operator K shown in FIG. 4, select the activation function operator 1 from Table 2 and add the activation function operator 1 to the activation function operator shown in FIG. 4, select the deconvolution operator 1 from Table 2 and add the deconvolution operator 1 to the deconvolution operator shown in FIG. 4, select the sum operator 1 from Table 2 and add the sum operator 1 to the sum operator shown in FIG. 4, and select the convolution operator 4 from Table 2 and add the convolution operator 4 to the convolution operator Y shown in FIG. 4, to obtain a first candidate policy 500 shown in FIG. 5.

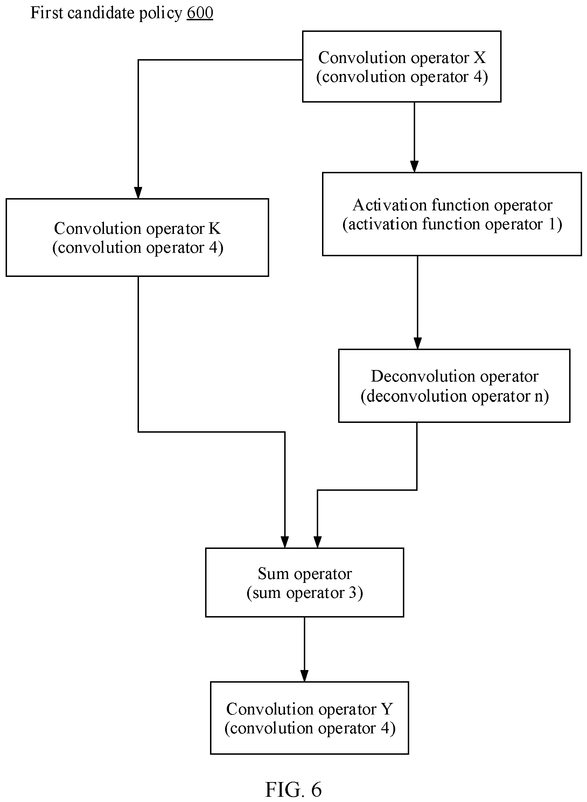

For another example, the development platform 200 may randomly select the convolution operator 4 from Table 2 and add the convolution operator 4 to the convolution operator X shown in FIG. 4, select the convolution operator 4 from Table 2 and add the convolution operator 4 to the convolution operator K shown in FIG. 4, select the activation function operator 1 from Table 2 and add the activation function operator 1 to the activation function operator shown in FIG. 4, select the deconvolution operator n from Table 2 and add the deconvolution operator n to the deconvolution operator shown in FIG. 4, select the sum operator 3 from Table 2 and add the sum operator 3 to the sum operator shown in FIG. 4, and select the convolution operator 4 from Table 2 and add the convolution operator 4 to the convolution operator Y shown in FIG. 4, to obtain a first candidate policy 600 shown in FIG. 6.

After adding an operator to the policy structure, the development platform 200 may set a parameter of the operator. The development platform 200 may randomly set the parameter of the operator added to the policy structure. For example, in an example of a convolution operator, a parameter of the convolution operator may be a convolution kernel size of the convolution operator. For example, the development platform 200 may set a convolution kernel size of the convolution operator 1 shown in FIG. 5 to 2x2, that is, the convolution operator 1 shown in FIG. 5 may perform a 2x2 convolution operation on data that is input into the convolution operator 1.

S304: The development platform 200 performs sample training on the first candidate policy to obtain a first candidate AI model.

For each service, the development platform 200 may store a plurality of pieces of sample data used for sample training. The development platform 200 may perform sample training on the first candidate policy based on sample data corresponding to the first service, to obtain the first candidate AI model. For example, if the first service is an OCR service, the sample data may be a large amount of text and text patterns thereof. The development platform 200 may associate the text patterns with corresponding text based on the first candidate AI model obtained after the development platform 200 performs sample training on the first candidate policy based on sample data of the OCR service. In this way, the first candidate AI model can recognize the text patterns, and determine the corresponding text.

For a method for performing, by the development platform 200, sample training on the first candidate policy based on sample data to obtain the first candidate AI model, refer to a method for performing, by a development platform, sample training on a candidate policy to obtain an AI model in a conventional technology. Details are not described herein in this embodiment of this application.

After generating the first candidate policy, the development platform 200 may compress the first candidate policy based on a compression algorithm, to obtain a compressed first candidate policy. Correspondingly, the development platform 200 performs sample training on the compressed first candidate policy to obtain the first candidate AI model.

In this embodiment of this application, after generating the first candidate policy, the development platform 200 may encode the first candidate policy to obtain a binary string of the first candidate policy. The development platform 200 may perform sample training on the binary string of the first candidate policy, to obtain the first candidate AI model.

Optionally, the first candidate policy (or the first candidate policy compressed by the development platform 200) generated by the development platform 200 may not satisfy a requirement of the foregoing parameter requirement information. For example, the parameter requirement information may include at least the requirement on the storage space occupied by the to-be-generated AI model. Based on this, before performing sample training on the first candidate policy (or the compressed first candidate policy), the development platform 200 may first determine whether the first candidate policy meets a preset condition. In this embodiment of this application, the first candidate policy and the compressed first candidate policy are collectively referred to as a first candidate policy herein. The preset condition includes: Storage space required by the first candidate policy meets the requirement on the storage space occupied by the to-be-generated AI model that is included in the parameter requirement information. That storage space required by the first candidate policy meets the requirement on the storage space occupied by the to-be-generated AI model that is included in the parameter requirement information specifically means that the storage space to be occupied by the first candidate policy is less than the storage space that the to-be-generated AI model is required to occupy in the parameter requirement information. The development platform 200 may perform sample training on the first candidate policy that meets the preset condition, to obtain the first candidate AI model. In this embodiment of this application, the storage space occupied by the to-be-generated AI model is storage space occupied by the model code when the running platform 210 stores model code of the to-be-generated Al model.

The development platform 200 may generate one or more first candidate policies. When the development platform 200 generates one first candidate policy, if the first candidate policy does not meet the preset condition, the development platform 200 may generate a new candidate policy. When the development platform 200 generates a plurality of first candidate policies, the development platform 200 may perform sample training on a first candidate policy in the plurality of first candidate policies that meets a preset condition, to obtain the first candidate AI model. If none of the plurality of first candidate policies meets the preset condition, the development platform 200 may generate a new candidate policy.

S305: The development platform 200 invokes a simulator component of the running platform 210 to run the first candidate AI model to execute processing on test data of the first service, so as to obtain a first running parameter.

The first running parameter may include at least one of: power consumption for running the first candidate AI model by a simulator component (AI Model Simulator) of the running platform 210, precision of processing data by running the first candidate AI model by the simulator component, and a speed for processing data by running the first candidate AI model by the simulator component, and a size of storage space occupied for running the first candidate AI model by the simulator component. It may be understood that the first running parameter obtained by the development platform corresponds to the foregoing parameter requirement information. For example, the foregoing parameter requirement information includes a requirement on the power consumption for running the to-be-generated AI model by the running platform and a requirement on the precision of processing the data by the to-be-generated AI model by the running platform; in this case, the first running parameter correspondingly includes power consumption for running the first candidate AI model by the simulator component (AI Model Simulator) of the running platform and precision of processing data by running the first candidate AI model by the simulator component.

In an implementation, the development platform 200 may store a plurality of simulator components of the running platform 210. Before invoking the simulator component of the running platform 210, the development platform 200 may first determine the running platform 210 indicated by the platform indication information, and then initialize the simulator component of the running platform 210.

In another implementation, the simulator component of the running platform 210 may be stored in a cloud server. A plurality of simulator components of the running platform 210 may be stored in the cloud server. The development platform 200 may send the platform indication information, the service indication information, and the first candidate AI model to the cloud server. After receiving the platform indication information, the service indication information, and the first candidate AI model, the cloud server may first determine the running platform 210 indicated by the platform indication information. Then, the cloud server initializes the simulator component of the running platform 210, and invokes the simulator component to run the first candidate AI model to execute processing on test data of the first service indicated by the service indication information, so as to obtain the first running parameter. Finally, the cloud server may send the first running parameter to the development platform 200. The development platform 200 may receive the first running parameter sent by the cloud server.

S306: The development platform 200 determines whether the first running parameter matches the parameter requirement information.

The development platform 200 determines whether the first running parameter matches the parameter requirement information, and obtains a corresponding first running parameter based on settings of the parameter requirement information. That the development platform 200 compares the first running parameter with the parameter requirement information may specifically include at least one of the following: The development platform 200 determines whether power consumption for running the first candidate AI model by the simulator component of the running platform 210 is less than or equal to power consumption required by the parameter requirement information, the development platform 200 determines whether precision of processing data by running the first candidate AI model by the simulator component is higher than or equal to precision required by the parameter requirement information, the development platform 200 determines whether a speed for processing data by running the first candidate AI model by the simulator component is higher than or equal to a speed required by a speed required by the parameter requirement information, and the development platform 200 determines whether storage space occupied for running the first candidate AI model by the simulator component (that is, a running memory size used for the simulator component to run the first candidate AI model) is less than or equal to a running memory size required by the parameter requirement information. The running memory required by the parameter requirement information is storage space occupied when the parameter requirement information requests the running platform 210 to run the first candidate AI model. It may be understood that the parameter requirement information herein may include a requirement on storage space occupied by the to-be-generated AI model, and the first running parameter may include a size of the storage space occupied by the first candidate AI model; in this case, step S306 includes: The development platform 200 determines whether the size of the storage space occupied by the first candidate AI model is less than or equal to the requirement on the storage space required by the parameter requirement information. It may be understood that the first running parameter herein may not include a size of storage space occupied by the first candidate AI model. Herein, whether the requirement on the storage space occupied by the to-be-generated AI model in the parameter requirement information is met may be determined by determining a size of storage space required by the first candidate policy, as described in related descriptions in step S304.

If power consumption for running the first candidate AI model by the simulator component is less than or equal to power consumption required by the parameter requirement information, precision of processing the data by the simulator component by running the first candidate AI model is higher than or equal to precision required by the parameter requirement information, a speed for processing the data by the simulator component by running the first candidate AI model is higher than or equal to a speed required by the parameter requirement information, and storage space occupied for running the first candidate AI model by the simulator component is less than or equal to a running memory required by the parameter requirement information, it indicates that the first running parameter matches the parameter requirement information, and that the first candidate AI model meets the requirement of the parameter requirement information. If the first running parameter matches the parameter requirement information, the development platform may continue to perform S307.

If the first running parameter does not meet "power consumption for running the first candidate AI model by the simulator component is less than or equal to power consumption required by the parameter requirement information", "precision of processing the data by the simulator component by running the first candidate AI model is higher than or equal to precision required by the parameter requirement information", "a speed for processing the data by the simulator component by running the first candidate AI model is higher than or equal to a speed required by the parameter requirement information", and "storage space occupied for running the first candidate AI model by the simulator component is less than or equal to a running memory required by the parameter requirement information", it indicates that the first running parameter does not match the parameter requirement information, and that the first candidate AI model does not match the requirement of the parameter requirement information. If the first running parameter does not match the parameter requirement information, the development platform may continue to perform S308.

S307: The development platform 200 generates, based on the first candidate AI model, model code runnable on the running platform 210.

If the first running parameter matches the parameter requirement information, the development platform 200 may determine that the first candidate AI model is a target AI model. The development platform 200 may generate, based on the first candidate AI model (that is, the target AI model), the model code runnable on the running platform 210. After generating the model code, the development platform 200 may send the model code to the running platform 210. The development platform 200 may generate, based on the first candidate AI model and the running platform 210 indicated by the platform indication information, the model code that can run on the running platform 210. After the model code is deployed on the running platform 210, the running platform 210 can execute the model code, to run a corresponding AI model. In other words, in this embodiment of this application, the AI model generated by the development platform 200 may be deployed on the running platform 210 (that is, the terminal) in a one-click manner.

S308: The development platform 200 obtains first difference information. The first difference information is used to indicate a difference between the first running parameter and the parameter requirement information.

If the first running parameter does not match the parameter requirement information, it indicates that the first candidate AI model does not meet the requirement of the foregoing parameter requirement information. In this case, the development platform 200 may obtain the difference between the first running parameter and the parameter requirement information (that is, the first difference information), to adjust the first candidate policy based on the first difference information.

For example, Table 3 shows an example of a running-parameter table shown in this embodiment of this application.

**Table 3**

| Running-parameter Table | | |
|---|---|---|
| | Required parameter (parameter requirement information) | Simulation parameter (First running parameter) |
| Power consumption | A | a |
| Precision | B | b |
| Speed | C | c |
| ... | ... | ... |
| Storage space usage | D | d |

As shown in Table 3, the required parameter is a parameter that needs to be reached when the parameter requirement information requires the running platform 210 to run the to-be-generated AI model, and the simulation parameter is a parameter used when the simulator component of the running platform 210 runs the first candidate AI model. For example, it is assumed that the power consumption required by the parameter requirement information is A, the precision required by the parameter requirement information is B, the speed required by the parameter requirement information is C, and the size, required by the parameter requirement information, of the storage space occupied for running is D. If the power consumption for running the first candidate AI model by the simulator component is a, the precision of processing the data by running the first candidate AI model by the simulator component is b, the speed for processing the data by running the first candidate AI model by the simulator component is c, and the size of the storage space occupied for running the first candidate AI model by the simulator component is d, the first difference information may be: A power consumption difference is A - a, a precision difference is B - b, a speed difference is C - c, and a storage space difference is D - d.

S309: The development platform 200 adjusts the first candidate policy based on the first difference information, to obtain a second candidate policy.

The development platform 200 may adjust the first candidate policy based on the first difference information and a preset algorithm, to obtain the second candidate policy. For example, the preset algorithm may be a multi-objective evolutionary algorithm (Multi-Objective evolutionary algorithm, MOEA), a gradient descent algorithm, or the like.

In this embodiment of this application, that the development platform 200 adjusts the first candidate policy may include: The development platform 200 replaces, with an available operator, a corresponding operator in the first candidate policy. For example, the development platform 200 may replace, with the sum operator 3 in Table 2, the sum operator 1 in the first candidate policy 500 shown in FIG. 5. That the development platform 200 adjusts the first candidate policy may further include: The development platform 200 adjusts the parameter of the operator in the first candidate policy. For example, the development platform 200 may adjust a convolution core size of the convolution operator 1 in the first candidate policy 500 shown in FIG. 5 from 2x2 to 3x3, so that the convolution operator 1 can perform a 3x3 convolution operation on data that is input into the convolution operator 1.

S310: The development platform 200 performs sample training on the second candidate policy to obtain a second candidate AI model.

For detailed descriptions of S310, refer to the descriptions of S304 in this embodiment of this application. Details are not described herein again in this embodiment of this application.

S311: The development platform 200 invokes the simulator component of the running platform 210 to run the second candidate AI model, so as to obtain a second running parameter, where the second running parameter is a performance parameter used by the simulator to run the second candidate AI model.

For detailed descriptions of S311, refer to the descriptions of S305 in this embodiment of this application. Details are not described herein again in this embodiment of this application.

S312: The development platform 200 determines whether the second running parameter matches the parameter requirement information.

For detailed descriptions of S312, refer to the descriptions of S306 in this embodiment of this application. Details are not described herein again in this embodiment of this application.

If the second running parameter matches the parameter requirement information, it indicates that the second candidate AI model meets the requirement of the foregoing parameter requirement information, and the development platform may continue to perform S313. If the second running parameter does not match the parameter requirement information, it indicates that the second candidate AI model does not meet the requirement of the foregoing parameter requirement information, and the development platform may continue to perform S314.

S313: The development platform 200 generates, based on the second candidate AI model, model code runnable on the running platform 210.

S314: The development platform 200 adjusts the second candidate policy based on difference information between the second running parameter and the parameter requirement information, and performs sample training on an adjusted second candidate policy to obtain a third candidate AI model.

In this embodiment of this application, the development platform 200 may invoke the simulator component to run the third candidate AI model, so as to obtain a running parameter. Then, the development platform 200 determines whether the running parameter matches the parameter requirement information. If the running parameter matches the parameter requirement information, the development platform may generate, based on the third candidate AI, the model code runnable on the running platform 210. If the running parameter does not match the parameter requirement information, the development platform 200 may continue to adjust the second candidate policy until the development platform 200 obtains an AI model that meets the requirement of the parameter requirement information.

For detailed descriptions of S312 to S314, refer to the descriptions of S306 to S310 in this embodiment of this application. Details are not described herein again in this embodiment of this application.

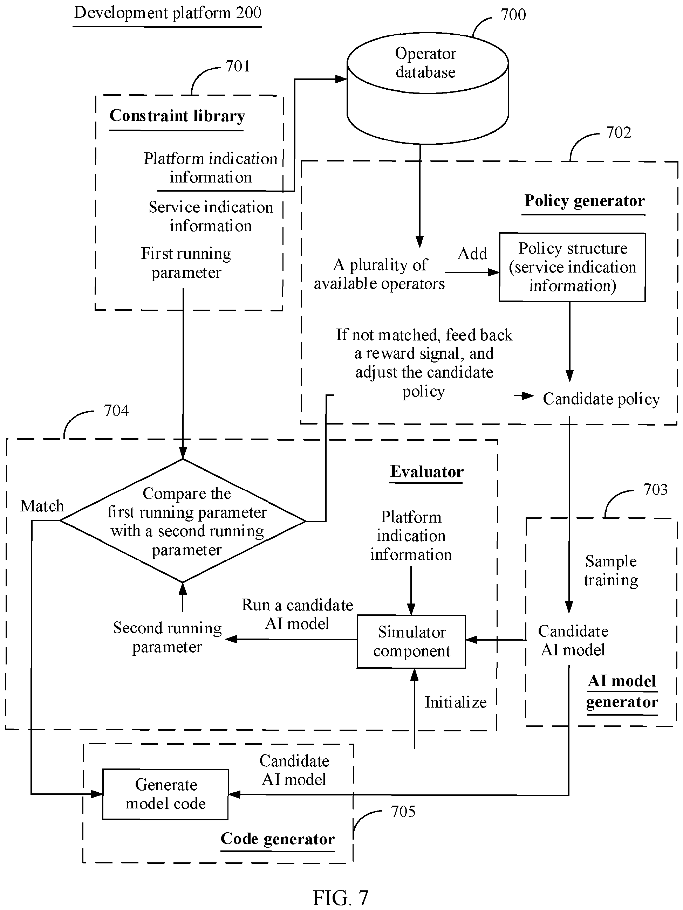

FIG. 7 is a schematic diagram of a framework of a principle of an AI model development method according to an embodiment of this application. As shown in FIG. 7, the development platform 200 may be divided into five modules: a constraint library 701, a policy generator 702, an AI model generator 703, an evaluator 704, and a code generator 705. The constraint library 701 may obtain constraints of a to-be-generated AI model, that is, the foregoing platform indication information, the foregoing service indication information, and the foregoing parameter requirement information. The policy generator 702 may select a plurality of available operators from the operator database 700 based on the platform indication information and the service indication information that are in the constraint library 701, add the selected available operators to a policy structure of an AI model of a first service indicated by the service indication information, and set parameters of the operators to obtain a candidate policy (that is, a first candidate policy). The AI model generator 703 may perform sample training on the candidate policy generated by the policy generator 702, to generate a candidate AI model. The evaluator 704 may initialize a simulator component of a running platform 210 indicated by the platform indication information, and run the candidate AI model by using the simulator component, to obtain a first running parameter. The evaluator 704 compares the parameter requirement information with the first running parameter. If the parameter requirement information matches the first running parameter, the code generator 705 generates model code based on the candidate AI model. If the parameter requirement information does not match the first running parameter, a reward signal is fed back to the policy generator 702, the policy generator 702 adjusts the candidate policy, and then the AI model generator 703 performs sample training on an adjusted candidate policy to obtain a new candidate AI model. The reward signal carries difference information (for example, first difference information).

This embodiment of this application provides the AI model development method. When the development platform 200 generates an AI model, reference is made not only to the platform indication information but also to a requirement on a performance parameter for running the AI model by the running platform 210. Therefore, the AI model generated by the development platform 210 satisfies a running environment of the running platform 210, and may be used to execute the first service, and a performance parameter meets a requirement on parameter requirement information when the first service is executed.

In addition, the development platform 200 may automatically generate, for different service requirements and different running environments, model code runnable on the running platform 210, and deploy the model code on the running platform. 210.

In another embodiment of this application, if the first running parameter does not match the parameter requirement information, when the development platform 210 adjusts the first candidate policy, reference is made not only to the first difference information (that is, the difference information between the first running parameter and the parameter requirement information), but also to difference information (that is, second difference information) between the first running parameter and a third running parameter that is obtained by executing processing on test data of the first service by a benchmark model.

FIG. 8A-1 and FIG. 8A-2 are a schematic diagram of a framework of a principle of an AI model development method according to an embodiment of this application. As shown in FIG. 8A-1 and FIG. 8A-2, a difference from FIG. 7 lies in: If an evaluator 704 determines that a first running parameter does not match running parameter information, a reward signal fed back by the evaluator 704 to a policy generator 702 may further include related information (for example, second difference information) of a running parameter (that is, the foregoing third running parameter) of a benchmark model in a benchmark model database 800. The benchmark model is obtained by the policy generator 702 from the benchmark model database 800 based on a first service indicated by service indication information. The benchmark model is an AI model used to execute the first service.

The benchmark model database 800 stores a plurality of AI models that can be used to process various services. These AI models may be run on the development platform 210 to execute corresponding services. However, these AI models may not be run on the running platform 210. Therefore, in this embodiment of this application, the development platform 200 may modify the benchmark model (that is, the AI model that is in the benchmark model database 800 and that is used to execute the first service), to obtain the target AI model.

For example, the benchmark model database 800 may store a plurality of AI models in a manner of a model information table shown in Table 4.

**Table 4**

| Model Information Table | |
|---|---|
| Service | AI Model |
| Text recognition | Text recognition AI model 1 |
| | Text recognition AI model 2 |
| | ... |
| | Text recognition AI model x |
| Image recognition | Image recognition AI model 1 |
| | Image recognition AI model 2 |
| | ... |
| | Image recognition AI model y |
| ... | ... |
| Natural language processing | Natural language processing AI model 1 |
| | Natural language processing AI model 2 |
| | ... |
| | Natural language processing AI model z |

For each service, the benchmark model database 800 may store one or more AI models used to execute the service. For example, the benchmark model database 800 may store one or more AI models used to execute a text recognition service (text recognition AI models for short).

For example, as shown in Table 4, the benchmark model database 800 may store x text recognition AI models, y image recognition AI models, z natural language processing AI models, and the like. The development platform 200 may select, as the benchmark model from the benchmark model database 800, an AI model used to execute the first service indicated by the service indication information.

An embodiment of this application further provides an AI model development method. As shown in FIG. 8B-1 and FIG. 8B-2, the method in this embodiment of this application may include S301 to S308, S801 and S802, S310 to S313, and S803. In the method, S301 to S308 are first performed, and then S801 is performed.

S801: The development platform 200 obtains second difference information. The second difference information is used to indicate a difference between the first running parameter and a third running parameter. The third running parameter is a running parameter obtained by executing processing on the test data of the first service by the benchmark model.

The development platform 200 may run the benchmark model to execute processing on the test data of the first service, so as to obtain the third running parameter. After running the benchmark model to obtain the third running parameter, the development platform 200 may store the third running parameter. In this way, after the development platform 200 adjusts the first candidate policy to generate a new candidate AI model (for example, the second candidate AI model), if a running parameter (for example, the second running parameter) obtained by the simulator component by running the second candidate AI model does not match the parameter requirement information, the development platform 200 can compare the second running parameter with the stored third running parameter, and does not need to run the benchmark model again to obtain the third running parameter.

S802: The development platform 200 adjusts the first candidate policy based on the first difference information and the second difference information, to obtain a second candidate policy.

After S802 is performed, the method in this embodiment of this application may further include S310 to S312. After S312 is performed, if a running performance parameter (the second running parameter) of the second candidate model matches the parameter requirement information, S313 is performed; or if a running performance parameter (the second running parameter) of the second candidate model does not match the parameter requirement information, the method in this embodiment of this application may further include S803.

S803: The development platform 200 adjusts the second candidate policy based on the difference information between the second running parameter and the parameter requirement information and the difference information between the second running parameter and the third running parameter, and performs sample training on an adjusted second candidate policy to obtain a third candidate AI model.

In this embodiment of this application, the development platform 200 may invoke the simulator component to run the third candidate AI model, so as to obtain a running parameter. Then, the development platform 200 determines whether the running parameter matches the parameter requirement information. If the running parameter matches the parameter requirement information, the development platform may generate, based on the third candidate AI, the model code runnable on the running platform 210. If the running parameter does not match the parameter requirement information, the development platform 200 may continue to adjust the third candidate policy until the development platform 200 obtains an AI model that meets a requirement of the parameter requirement information.

In another embodiment of this application, the development platform 200 may modify an existing benchmark model to generate an AI model that can be run on the running platform 210 to execute the first service. FIG. 8C-1 and FIG. 8C-2 are a schematic diagram of a framework of a principle of an AI model development method according to an embodiment of this application. As shown in FIG. 8C-1 and FIG. 8C-2, a difference from FIG. 8A-1 and FIG. 8A-2 lies in: After a policy generator 702 selects a plurality of available operators from an operator database 700 based on platform indication information and service indication information that are in a constraint library 701, there is no need to add an available operator to a policy structure of an AI model for a first service to generate a new candidate policy. Instead, an operator is randomly selected from the plurality of available operators based on a policy structure of a benchmark model, an operator that is in the benchmark model and that does not correspond to a running platform is replaced with the randomly selected operator, and a parameter of each operator is adjusted to obtain a candidate policy.

An embodiment of this application further provides an AI model development method. As shown in FIG. 9A to FIG. 9C, the AI model development method may include S901 to S916.

S901: A development platform 200 obtains platform indication information, service indication information, and parameter requirement information of a to-be-generated AI model.

S902: The development platform 200 selects, from an operator database, a plurality of available operators that correspond to a running platform 210 and that are used to execute a first service.

S901 is the same as S301. S902 is the same as S302.

S903: The development platform 200 determines a benchmark model of the first service, where the benchmark model is an AI model used to process the first service.

A benchmark model database 800 includes one or more AI models used to execute the first service indicated by the service indication information. The development platform 200 may randomly select an AI model from the one or more AI models (an AI model that is in the benchmark model database 800 and that is used to execute the first service) as the benchmark model. For example, it is assumed that the first service is a text recognition service. The development platform 200 may randomly select, as the benchmark model, a text recognition AI model from the text recognition AI models such as the text recognition AI model 1, the text recognition AI model 2, and the text recognition AI model x that are shown in Table 4.

S904: The development platform 200 randomly selects an operator from the plurality of available operators based on a policy structure of the benchmark model; replaces, with the randomly selected operator, an operator that is in the benchmark model and that does not correspond to the running platform 210; and adjusts a parameter of each operator, to obtain a first candidate policy.

For example, as shown in FIG. 10(a), a benchmark model 1000 is a benchmark model selected by the development platform for the first service. Referring to Table 2, it can be learned that a convolution operator 2, an activation function operator k, a deconvolution operator 2, and a sum operator 2 in the benchmark model 1000 shown in FIG. 10(a) do not correspond to the running platform 210. That is, the convolution operator 2, the activation function operator k, the deconvolution operator 2, and the sum operator 2 that are shown in FIG. 10(a) cannot be run on the running platform 210.

The development platform 200 may randomly select a convolution operator, an activation function operator, a deconvolution operator, and a sum operator from the foregoing available operators (for example, in the available-operator table shown in Table 2), to replace the convolution operator 2, and the activation function operator k, the deconvolution operator 2, and the sum operator 2 that are shown in FIG. 10(a). For example, it is assumed that the development platform 200 selects the convolution operator 1, the activation function operator 1, the deconvolution operator 1, and the sum operator 1 from the available-operator table shown in Table 2. In this case, the convolution operator 2 shown in FIG. 10(a) is replaced by the convolution operator 1, the activation function operator k shown in FIG. 10(a) is replaced by the activation function operator 1, the activation function operator 2 shown in FIG. 10(a) is replaced by the deconvolution function operator 1, and the sum operator 2 shown in FIG. 10(a) is replaced by the summation function operator 1, to obtain a model 1001 shown in FIG. 10(b). In addition, the development platform 200 may further adjust a parameter of each operator in the model 1001 shown in FIG. 10(b).

S905: The development platform 200 compresses the first candidate policy based on a compression algorithm, to obtain a compressed first candidate policy.

For detailed descriptions of S905, refer to the method for compressing the first candidate policy by the development platform 200 in the foregoing embodiment of this application. Details are not described herein again in this embodiment of this application. S905 is optional.

S906: The development platform 200 performs sample training on the compressed first candidate policy to obtain a first candidate AI model.

S907: The development platform 200 invokes a simulator component of the running platform 210, to run the first candidate AI model to execute processing on test data of the first service, so as to obtain a first running parameter.

S908: The development platform 200 determines whether the first running parameter matches the parameter requirement information.

S907 is the same as S305. S908 is the same as S306.

Specifically, if the first running parameter matches the parameter requirement information, the development platform 200 performs S909; or if the first running parameter does not match the parameter requirement information, the development platform 200 performs S910.

S909: The development platform 200 generates, based on the first candidate AI model, model code runnable on the running platform 210.

After generating the model code, the development platform 200 may send the model code to the running platform 210. For detailed descriptions of S909, refer to the descriptions of S307 in the foregoing embodiment of this application. Details are not described herein again in this embodiment of this application.

S910: The development platform 200 obtains first difference information and second difference information, where the first difference information is used to indicate a difference between the first running parameter and the parameter requirement information, and the second difference information is used to indicate a difference between the first running parameter and a third running parameter.

The first candidate policy is obtained by the development platform 200 by modifying the benchmark model. Therefore, if the first running parameter does not match the parameter requirement information, when the development platform 200 generates a new candidate policy, reference may be made to a difference between a running parameter (that is, the third running parameter) obtained by executing processing on the test data of the first service by the benchmark model and a running parameter (that is, the first running parameter) obtained by executing processing on the test data of the first service by the first candidate AI model. In this way, an AI model that meets a requirement of the parameter requirement information can be generated more quickly.

S911: The development platform 200 adjusts the first candidate policy based on the first difference information and the second difference information, to obtain a second candidate policy.

In this embodiment of this application, when the development platform 200 adjusts the first candidate policy to obtain a new candidate policy (for example, a third candidate policy), reference may be made not only to difference information (that is, the first difference information) between the parameter requirement information and a running parameter obtained by executing processing on the test data of the first service by the first candidate AI model, but also to difference information (that is, the second difference information) between a running parameter obtained by executing processing on the test data of the first service by the benchmark model and the running parameter obtained by executing processing on the test data of the first service by the first candidate AI model.

S912: The development platform 200 performs sample training on the second candidate policy to obtain a second candidate AI model.

S913: The development platform 200 invokes the simulator component of the running platform 210 to run the second candidate AI model, so as to obtain a second running parameter.

S912 is the same as S310, and S913 is the same as S311.

S914: The development platform 200 determines whether the second running parameter matches the parameter requirement information.

If the second running parameter matches the parameter requirement information, it indicates that the third candidate AI model meets the requirement of the parameter requirement information, and the development platform may continue to perform S915. If the second running parameter does not match the parameter requirement information, it indicates that the second candidate AI model does not meet the requirement of the parameter requirement information, and the development platform may continue to perform S916.

S915: The development platform 200 generates, based on the second candidate AI model, model code runnable on the running platform 210.

S916: The development platform 200 adjusts the second candidate policy based on the difference information between the second running parameter and the parameter requirement information and the difference information between the second running parameter and the third running parameter, and performs sample training on an adjusted second candidate policy to obtain a third candidate AI model.

S915 is the same as S313. S916 is the same as S314.

This embodiment of this application provides the AI model development method. The development platform 200 may randomly select the operator from the plurality of available operators based on the policy structure of the benchmark model; replace, with the randomly selected operator, the operator that is in the benchmark model and that does not correspond to the running platform 210; and adjust the parameter of each operator, to obtain the first candidate policy. The benchmark model is an AI model used to execute the first service. In other words, when the development platform 200 generates the AI model, reference is made to the platform indication information. In addition, when the development platform 200 generates the AI model, reference is further made to a requirement on a performance parameter used for the running platform 210 to run the AI model. Therefore, the AI model generated by the development platform 210 satisfies a running environment of the running platform 210, and may be used to execute the first service. In addition, the performance parameter used when the first service is executed meets the requirement of the parameter requirement information. In addition, the development platform 200 may automatically generate, for different service requirements and different running environments, model code runnable on the running platform 210, and deploy the model code on the running platform. 210.

For example, FIG. 11 shows an AI model instance used to execute an OCR service according to an embodiment of this application. It is assumed that the first service indicated by the foregoing service indication information is the OCR service. The running platform indicated by the foregoing platform indication information is a Huawei Mate 10. Parameter requirement information requires that a time spent by a to-be-generated AI model (that is, a target AI model) in recognizing a line of text be less than or equal to 1 second (s). In other words, the parameter requirement information requires that a speed for processing data by running the target AI model by the Huawei Mate 10 be less than or equal to 1s per line of text. The parameter requirement information requires that storage space occupied when the target AI model is run on the Huawei Mate 10 be less than or equal to 10 megabits (MB). The parameter requirement information requires that recall of recognizing text by the target AI model be higher than or equal to 90%, and the parameter requirement information requires that precision of recognizing the text by the target AI model be higher than or equal to 90%.

The recall of recognizing the text by the target AI model is a proportion of recognized text in a line of text recognized by the target AI model. For example, it is assumed that one line of text includes 10 Chinese characters. If the target AI model recognizes nine Chinese characters in the 10 Chinese characters, recall of recognizing the text by the target AI model is 90%. The precision of recognizing the text by the target AI model is a proportion of correctly recognized text in a line of text recognized by the target AI model. For example, it is assumed that one line of text includes 10 Chinese characters. The target AI model recognizes nine Chinese characters in the 10 Chinese characters. Among the recognized nine Chinese characters, recognition results of eight Chinese characters are true, and a recognition result of one Chinese character is false. In this case, precision of recognizing the text by the target AI model is (8/9) x 100% = 88.89%.

As shown in FIG. 11, an AI model 1100 specific for the OCR service may include a convolutional block 1101, a convolutional block 1102, a convolutional block 1103, a deconvolution operator 1104, a convolutional block 1106, a sum operator 1107, a deconvolution operator 1108, a convolutional block 1105, a sum operator 1109, a convolutional block 1110, a convolutional block 1111, and a convolutional block 1112. The AI model 1100 specific for the OCR service processes data of the OCR service according to data processing logic corresponding to a direction that is shown in FIG. 11 and that corresponds to an arrow in which data flows into each operator or each convolution block.

The convolutional block shown in FIG. 11 includes a plurality of convolutional layers. For example, the convolutional block 1101 is used as an example. As shown in FIG. 12(a), the convolutional block 1101 may include convolutional layers such as a convolutional layer 1, a convolutional layer 2, and a convolutional layer N. Each convolutional layer may include a convolution operator, a deconvolution operator, a batch standardization operator, an activation function operator, and the like. For example, as shown in FIG. 12(b), the convolutional layer 1 may include a convolution operator, a deconvolution operator, a batch standardization operator, an activation function operator, and the like.

After generating the AI model 1100 specific for the OCR service shown in FIG. 11, the development platform 200 invokes a simulator component of the Huawei Mate 10 to run the AI model 1100 specific for the OCR service, so as to execute the OCR service to process data (for example, a line of text). In this case, the following first running parameter may be obtained: 800 milliseconds (ms) less than a processing speed, storage space of 8 MB occupied for running, text recognition recall of 91%, and text recognition precision of 90%. Due to 800 ms < 1s, 8 MB < 10 MB, 91% > 90%, and 90% = 90%, the AI model 1100 specific for the OCR service shown in FIG. 11 is the target AI model. The development platform 200 may generate model code for the AI model 1100 specific for the OCR service.

It may be understood that, to implement the foregoing functions, the development platform 200 includes corresponding hardware structures and/or software modules for performing the functions. A person of ordinary skill in the art should easily be aware that, units and algorithm steps of the examples described with reference to the embodiments disclosed in this specification can be implemented in the embodiments of this application by hardware or a combination of hardware and computer software. Whether a specific function is performed by hardware or hardware driven by computer software depends on particular applications and design constraints of the technical solutions. A person skilled in the art may use different methods to implement the described functions for each particular application, but it should not be considered that the implementation goes beyond the scope of the embodiments of this application.

In the embodiments of this application, the development platform 200 may be divided into functional modules based on the foregoing method examples. For example, division into the functional modules may be performed in correspondence to the functions, or two or more functions may be integrated into one processing module. The integrated module may be implemented in a form of hardware, or may be implemented in a form of a software functional module. It should be noted that, in this embodiment of this application, division into the modules is an example, and is merely a logical function division. In actual implementation, another division manner may be used.

When an integrated unit is used, FIG. 13 is a possible schematic structural diagram of the development platform in the foregoing embodiments. The development platform 1300 includes a processor 1301, a memory 1302, and a plurality of simulator components (for example, a simulator component 1303 and a simulator component 1304). The simulator component 1303 is a simulator component of a running platform indicated by platform indication information. The simulator component 1304 is a simulator component of another running platform. The memory 1302 and the simulator component 1303 are coupled to the processor 1301. The memory 1302 is configured to store computer program code. The computer program code includes a computer instruction. When the processor 1301 executes the computer instruction, the processor 1301 is configured to support the development platform 1300 in performing steps S301 to S304, S306 to S310, S312 to S314, S801 to S803, S901 to S906, S908 to 912, and S914 to S916 in the foregoing method embodiments, and/or performing other processes used for the technology described in this specification. The simulator component 1303 is configured to: in response to invoking by the processor 1301, support the development platform 1300 in performing steps S305, S311, S907, and S913 in the foregoing method embodiments, and/or performing other processes used for the technology described in this specification.

The simulator component 1303 may simulate a running environment of the running platform. The processor 1301 may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field-Programmable Gate Array, FPGA) or another programmable logical device, a transistor logical device, a hardware component, or any combination thereof. The processor 1301 may further include an NPU. The processor 1301 may implement or execute the example logical blocks, modules, and circuits described with reference to content disclosed in this application. The processor may be a combination of processors implementing a computing function, for example, a combination of one or more microprocessors, or a combination of a DSP and a microprocessor. The communications module may be a transceiver, a transceiver circuit, a communications interface, or the like.

Optionally, the memory 1302 may store the operator database and the benchmark model database that are described in the foregoing embodiments. The memory 1302 may further store a running parameter, that is, the third running parameter, used by the benchmark model to execute processing on test data of a first service.

Certainly, unit/modules in the development platform 1300 include but are not limited to the processor 1301, the memory 1302, and the plurality of simulator components. For example, the development platform 1300 may further include a communications interface (for example, a communications module such as a radio frequency module, a Wi-Fi module, or a Bluetooth module), a display, and audio modules (including a microphone, a loudspeaker, a receiver, and a headset interface). The memory 1302, the plurality of simulator components, the communications interface, the display, the microphone, the receiver, and the speaker may be coupled to the processor 1301 by using a bus (a thick black line shown in FIG. 13).

An embodiment of this application further provides a computer storage medium. The computer storage medium stores computer program code. When the processor 1301 executes the computer program code, the development platform 1300 performs related method steps in any one of FIG. 3A and FIG. 3B, FIG. 8B-1 and FIG. 8B-2, or FIG. 9A to FIG. 9C to implement the method in the foregoing embodiments.

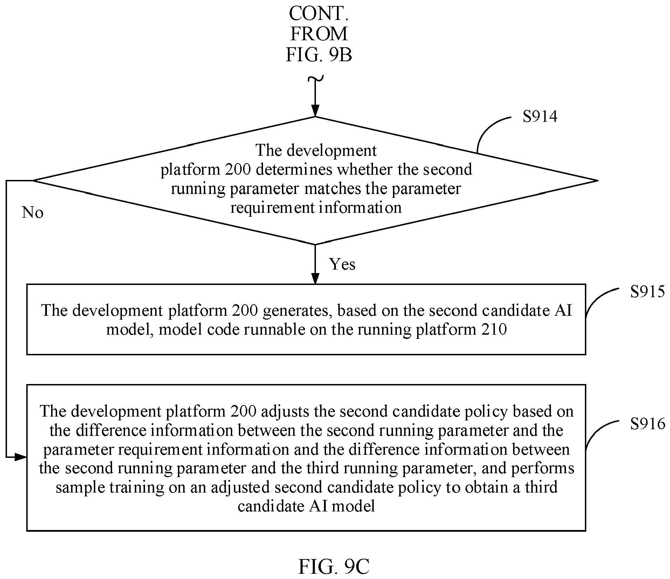

An embodiment of this application further provides a computer program product. When the computer program product is run on a computer, the computer is enabled to perform related method steps in any one of FIG. 3A and FIG. 3B, FIG. 8B-1 and FIG. 8B-2, or FIG. 9Ato FIG. 9C to implement the method in the foregoing embodiments.

The development platform 1300, the computer storage medium, and the computer program product provided in the embodiments of this application are all configured to perform the corresponding methods provided above. Therefore, for beneficial effects that can be achieved by the development platform 1300, the computer storage medium, and the computer program product, refer to beneficial effects in the corresponding methods provided above. Details are not described herein again.

The foregoing descriptions about implementations allow a person skilled in the art to understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or some of the functions described above.

In the embodiments provided in this application, it should be understood that the disclosed apparatus and method may be implemented in other manners. For example, the described apparatus embodiment is merely an example. For example, division into the modules or units is merely logical function division, or may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and components displayed as units may be one or more physical units, may be located in one place, or may be distributed on different places. Some or all of the units may be selected based on actual requirements to achieve the objectives of the solutions of the embodiments.

In addition, the functional units in the embodiments of this application may be integrated into one processing unit, or each of the units may exist alone physically, or two or more of the units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of this application essentially, or a part contributing to the prior art, or all or some of the technical solutions may be implemented in a form of a software product. The software product is stored in a storage medium and includes instructions for instructing a device (which may be a single-chip microcomputer, a chip, or the like) or a processor (processor) to perform all or some of the steps in the methods described in the embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application. Therefore, the protection scope of this application shall be subject to the protection scope of the claims.

## Claims

1. An artificial intelligence, AI, model development method, comprising:
obtaining (S301), by a development platform (200), platform indication information, service indication information, and parameter requirement information of a to-be-generated AI model, wherein the platform indication information is used to indicate a running platform on which the to-be-generated AI model is run, the service indication information is used to indicate a first service to be executed by the to-be-generated AI model, and the parameter requirement information is used to indicate a requirement on a performance parameter of the to-be-generated AI model;
selecting (S302), by the development platform (200) from an operator database, a plurality of available operators that correspond to the running platform and that are used to execute the first service, wherein the operator database stores a plurality of operators used to generate an AI model;
charaterised by:
selecting (S303), by the development platform (200), an operator from the plurality of available operators, and setting a parameter of the selected operator, to generate a first candidate policy, wherein the first candidate policy comprises a plurality of operators and is used to represent data processing logic of the to-be-generated AI model;
performing (S304), by the development platform (200), sample training on the first candidate policy to obtain a first candidate AI model;
invoking (S305), by the development platform (200), a simulator component of the running platform to run the first candidate AI model to execute processing on test data of the first service, so as to obtain a first running parameter; and
if the first running parameter matches the parameter requirement information, determining, by the development platform (200), that the first candidate AI model is a target AI model.

2. The AI model development method according to claim 1, wherein after the determining, by the development platform (200), that the first candidate AI model is a target AI model, the method further comprises:
generating (S307), by the development platform (200) based on the first candidate AI model, model code runnable on the running platform.

3. The AI model development method according to claim 1 or 2, wherein the selecting (S302), by the development platform (200) from an operator database, a plurality of available operators that correspond to the running platform and that are used to execute the first service comprises:
determining, by the development platform (200), a policy structure of the to-be-generated AI model based on the first service, wherein the policy structure is used to represent data processing logic of the to-be-generated AI model; and
selecting, by the development platform (200) from the operator database according to the data processing logic, the plurality of available operators corresponding to the running platform; and
the selecting (S303), by the development platform (200), an operator from the plurality of available operators, and setting a parameter of the selected operator, to generate a first candidate policy, wherein the first candidate policy comprises a plurality of operators, comprises:
selecting, by the development platform (200), the operator from the plurality of available operators, adding the selected operator to the policy structure, and setting the parameter of the selected operator, to generate the first candidate policy.

4. The AI model development method according to any one of claims 1 to 3, wherein the method further comprises:
obtaining (S308), by the development platform (200), first difference information if the first running parameter does not match the parameter requirement information, wherein the first difference information is used to indicate a difference between the first running parameter and the parameter requirement information;
adjusting, by the development platform (200), the operator in the first candidate policy based on the first difference information, to obtain a second candidate policy;
performing, by the development platform (200), sample training on the second candidate policy to obtain a second candidate AI model;
invoking, by the development platform (200), the simulator component to run the second candidate AI model, so as to obtain a second running parameter; and
if the second running parameter matches the parameter requirement information, determining, by the development platform (200), that the second candidate AI model is the target AI model.

5. The AI model development method according to any one of claims 1 to 3, wherein before the selecting (S303), by the development platform (200), an operator from the plurality of available operators, and setting a parameter of the selected operator, to generate a first candidate policy, the method further comprises:
determining, by the development platform (200), a benchmark model of the first service, wherein the benchmark model is an AI model used to process the first service, the policy structure of the to-be-generated AI model is a policy structure of the benchmark model, and the policy structure is used to represent data processing logic of the benchmark model; and
the selecting (S303), by the development platform (200), an operator from the plurality of available operators, and setting a parameter of the selected operator, to generate a first candidate policy comprises:
randomly selecting, by the development platform (200), an operator from the plurality of available operators based on the policy structure of the benchmark model; replacing, with the randomly selected operator, an operator that is in the benchmark model and that does not correspond to the running platform; and adjusting the parameter of the operator, to obtain the first candidate policy.

6. The AI model development method according to any one of claims 1 to 3 or 5, wherein the method further comprises:
obtaining, by the development platform (200), first difference information and second difference information if the first running parameter does not match the parameter requirement information, wherein the first difference information is used to indicate a difference between the first running parameter and the parameter requirement information, the second difference information is used to indicate a difference between the first running parameter and a third running parameter, and the third running parameter is a running parameter obtained by executing processing on the test data of the first service by the benchmark model;
adjusting, by the development platform (200), the operator in the first candidate policy based on the first difference information and the second difference information, to obtain a second candidate policy;
performing, by the development platform (200), sample training on the second candidate policy to obtain a second candidate AI model;
invoking, by the development platform (200), the simulator component to run the second candidate AI model, so as to obtain a second running parameter; and
if the second running parameter matches the parameter requirement information, determining, by the development platform (200), that the second candidate AI model is the target AI model.

7. The AI model development method according to any one of claims 1 to 6, wherein after the generating a first candidate policy, the method further comprises:
compressing, by the development platform (200), the first candidate policy based on a compression algorithm, to obtain a compressed first candidate policy; and
the performing, by the development platform (200), sample training on the first candidate policy to obtain a first candidate AI model comprises:
performing, by the development platform (200), sample training on the compressed first candidate policy to obtain the first candidate AI model.

8. The AI model development method according to any one of claims 1 to 7, wherein after the generating a first candidate policy, the method further comprises:
encoding, by the development platform (200), the first candidate policy to obtain a binary string of the first candidate policy; and
the performing, by the development platform (200), sample training on the first candidate policy to obtain a first candidate AI model comprises:
performing, by the development platform (200), sample training on the binary string of the first candidate policy to obtain the first candidate AI model.

9. The AI model development method according to any one of claims 1 to 8, wherein the parameter requirement information comprises at least one of: a requirement on power consumption for running the to-be-generated AI model by the running platform, a requirement on precision of processing data by running the to-be-generated AI model by the running platform, a requirement on a speed for processing data by running the to-be-generated AI model by the running platform, a requirement on storage space occupied by the to-be-generated AI model, or a requirement on storage space required by the running platform to run the to-be-generated AI model.

10. The AI model development method according to claim 9, wherein the parameter requirement information comprises at least the requirement on the storage space occupied by the to-be-generated AI model;
before the performing (S304), by the development platform (200), sample training on the first candidate policy to obtain a first candidate AI model, the method further comprises:
determining, by the development platform (200), whether the first candidate policy meets a preset condition, wherein the preset condition comprises: storage space required by the first candidate policy meets the requirement on the storage space occupied by the to-be-generated AI model that is comprised in the parameter requirement information; and
the performing (S304), by the development platform (200), sample training on the first candidate policy to obtain a first candidate AI model comprises:
if the first candidate policy meets the preset condition, performing, by the development platform (200), sample training on the first candidate policy to obtain the first candidate AI model.

11. A development platform (1300), wherein the development platform (1300) comprises a processor (1301), a memory (1302), and a plurality of simulator components (1303, 1304); the memory (1302) and the plurality of simulator components (1303, 1304) are coupled to the processor (1301); the plurality of simulator components (1303, 1304) comprise a simulator component (1303) of a running platform; the memory (1302) is configured to store computer program code; the computer program code comprises a computer instruction; and when the processor (1301) executes the foregoing computer instruction,
the processor (1301) is configured to: obtain platform indication information, service indication information, and parameter requirement information of a to-be-generated artificial intelligence AI model, wherein the platform indication information is used to indicate a running platform on which the to-be-generated AI model is run, the service indication information is used to indicate a first service to be executed by the to-be-generated AI model, and the parameter requirement information is used to indicate a requirement on a performance parameter of the to-be-generated AI model; select, from an operator database, a plurality of available operators that correspond to the running platform and that are used to execute the first service, wherein the operator database stores a plurality of operators used to generate an AI model; **characterised in that** the processor is further configured to:
select an operator from the plurality of available operators, and set a parameter of the selected operator, to generate a first candidate policy, wherein the first candidate policy comprises a plurality of operators and is used to represent data processing logic of the to-be-generated AI model; and perform sample training on the first candidate policy to obtain a first candidate AI model; and
the processor (1301) is further configured to: invoke the simulator component of the running platform in the plurality of simulator components to run the first candidate AI model to execute processing on test data of the first service, so as to obtain a first running parameter; and if the first running parameter matches the parameter requirement information, determine that the first candidate AI model is a target AI model.

12. The development platform (1300) according to claim 11, wherein the processor (1301) is further configured to: after determining that the first candidate AI model is the target AI model, generate, based on the first candidate AI model, model code runnable on the running platform.

13. The development platform (1300) according to claim 11 or 12, wherein that the processor (1301) is configured to select, from an operator database, a plurality of available operators that correspond to the running platform and that are used to execute the first service comprises:
the processor (1301) being configured to: determine a policy structure of the to-be-generated AI model based on the first service, wherein the policy structure is used to represent data processing logic of the to-be-generated AI model; add an operator to the policy structure according to the data processing logic to generate the first candidate policy; and select, from the operator database according to the data processing logic, the plurality of available operators that correspond to the running platform; and
that the processor (1301) is configured to: select an operator from the plurality of available operators, and set a parameter of the selected operator, to generate a first candidate policy, wherein the first candidate policy comprises a plurality of operators, comprises:
the processor (1301) being configured to: select the operator from the plurality of available operators, add the selected operator to the policy structure, and set the parameter of the selected operator, to generate the first candidate policy.

## Patentansprüche

1. Verfahren zur Modellentwicklung für künstliche Intelligenz, KI-Modellentwicklung, umfassend:
Erlangen (S301), durch eine Entwicklungsplattform (200), von Plattformanzeigeinformationen, Dienstanzeigeinformationen und Parameteranforderungsinformationen eines zu generierenden KI-Modells, wobei die Plattformanzeigeinformationen verwendet werden, um eine Ausführungsplattform anzuzeigen, auf der das zu generierende KI-Modell ausgeführt wird, die Dienstanzeigeinformationen verwendet werden, um einen ersten Dienst anzuzeigen, der durch das zu generierende KI-Modell auszuführen ist, und die Parameteranforderungsinformationen verwendet werden, um eine Anforderung an einen Leistungsparameter des zu generierenden KI-Modells anzuzeigen;
Auswählen (S302), durch die Entwicklungsplattform (200) aus einer Operatordatenbank, einer Vielzahl verfügbarer Operatoren, die der Ausführungsplattform entsprechen und verwendet werden, um den ersten Dienst auszuführen, wobei die Operatordatenbank eine Vielzahl von Operatoren speichert, die verwendet werden, um ein KI-Modell zu generieren;
**gekennzeichnet durch**:
Auswählen (S303), durch die Entwicklungsplattform (200), eines Operators aus der Vielzahl verfügbarer Operatoren und Festlegen eines Parameters des ausgewählten Operators, um eine erste Kandidatenrichtlinie zu generieren, wobei die erste Kandidatenrichtlinie eine Vielzahl von Operatoren umfasst und verwendet wird, um die Datenverarbeitungslogik des zu generierenden KI-Modells darzustellen;
Durchführen (S304), durch die Entwicklungsplattform (200), eines Probetrainings für die erste Kandidatenrichtlinie, um ein erstes KI-Kandidaten-Modell zu erlangen;
Aufrufen (S305), durch die Entwicklungsplattform (200), einer Simulatorkomponente der Ausführungsplattform, um das erste KI-Kandidaten-Modell auszuführen, um eine Verarbeitung an Testdaten des ersten Dienstes auszuführen, um so einen ersten Ausführungsparameter zu erlangen; und
wenn der erste Ausführungsparameter mit den Parameteranforderungsinformationen übereinstimmt, Bestimmen, durch die Entwicklungsplattform (200), dass das erste KI-Kandidaten-Modell ein KI-Ziel-Modell ist.

2. Verfahren zur KI-Modellentwicklung nach Anspruch 1, wobei das Verfahren nach dem Bestimmen, durch die Entwicklungsplattform (200), dass das erste KI-Kandidaten-Modell ein KI-Ziel-Modell ist, ferner Folgendes umfasst:
Generieren (S307), durch die Entwicklungsplattform (200) auf der Grundlage des ersten KI-Kandidaten-Modells, eines auf der Ausführungsplattform ausführbaren Modellcodes.

3. Verfahren zur KI-Modellentwicklung nach Anspruch 1 oder 2, wobei das Auswählen (S302), durch die Entwicklungsplattform (200) aus einer Operatordatenbank, einer Vielzahl verfügbarer Operatoren, die der Ausführungsplattform entsprechen und verwendet werden, um den ersten Dienst auszuführen, Folgendes umfasst:
Bestimmen, durch die Entwicklungsplattform (200), einer Richtlinienstruktur des zu generierenden KI-Modells auf der Grundlage des ersten Dienstes, wobei die Richtlinienstruktur verwendet wird, um die Datenverarbeitungslogik des zu generierenden KI-Modells darzustellen; und
Auswählen, durch die Entwicklungsplattform (200) aus der Operatordatenbank gemäß der Datenverarbeitungslogik, der Vielzahl verfügbarer Operatoren, die der Ausführungsplattform entsprechen; und
das Auswählen (S303), durch die Entwicklungsplattform (200), eines Operators aus der Vielzahl verfügbarer Operatoren und das Festlegen eines Parameters des ausgewählten Operators, um eine erste Kandidatenrichtlinie zu generieren, wobei die erste Kandidatenrichtlinie eine Vielzahl von Operatoren umfasst, Folgendes umfasst:
Auswählen, durch die Entwicklungsplattform (200), des Operators aus der Vielzahl verfügbarer Operatoren, Hinzufügen des ausgewählten Operators zu der Richtlinienstruktur und Festlegen des Parameters des ausgewählten Operators, um die erste Kandidatenrichtlinie zu generieren.

4. Verfahren zur KI-Modellentwicklung nach einem der Ansprüche 1 bis 3, wobei das Verfahren ferner Folgendes umfasst:
Erlangen (S308), durch die Entwicklungsplattform (200), erster Differenzinformationen, wenn der erste Ausführungsparameter nicht mit den Parameteranforderungsinformationen übereinstimmt, wobei die ersten Differenzinformationen verwendet werden, um eine Differenz zwischen dem ersten Ausführungsparameter und den Parameteranforderungsinformationen anzuzeigen;
Anpassen, durch die Entwicklungsplattform (200), des Operators in der ersten Kandidatenrichtlinie auf der Grundlage der ersten Differenzinformationen, um eine zweite Kandidatenrichtlinie zu erlangen;
Durchführen, durch die Entwicklungsplattform (200), eines Probetrainings für die zweite Kandidatenrichtlinie, um ein zweites KI-Kandidaten-Modell zu erlangen;
Aufrufen, durch die Entwicklungsplattform (200), der Simulatorkomponente, um das zweite KI-Kandidaten-Modell auszuführen, um so einen zweiten Ausführungsparameter zu erlangen; und
wenn der zweite Ausführungsparameter mit den Parameteranforderungsinformationen übereinstimmt, Bestimmen, durch die Entwicklungsplattform (200), dass das zweite KI-Kandidaten-Modell das KI-Ziel-Modell ist.

5. Verfahren zur KI-Modellentwicklung nach einem der Ansprüche 1 bis 3, wobei, vor dem Auswählen (S303), durch die Entwicklungsplattform (200), eines Operators aus der Vielzahl verfügbarer Operatoren und Festlegen eines Parameters des ausgewählten Operators, um eine erste Kandidatenrichtlinie zu generieren, das Verfahren ferner Folgendes umfasst:
Bestimmen, durch die Entwicklungsplattform (200), eines Benchmark-Modells des ersten Dienstes, wobei das Benchmark-Modell ein KI-Modell ist, das verwendet wird, um den ersten Dienst zu verarbeiten, die Richtlinienstruktur des zu generierenden KI-Modells eine Richtlinienstruktur des Benchmark-Modells ist und die Richtlinienstruktur verwendet wird, um die Datenverarbeitungslogik des Benchmark-Modells darzustellen; und
das Auswählen (S303), durch die Entwicklungsplattform (200), eines Operators aus der Vielzahl verfügbarer Operatoren und das Festlegen eines Parameters des ausgewählten Operators, um eine erste Kandidatenrichtlinie zu generieren, Folgendes umfasst:
zufälliges Auswählen, durch die Entwicklungsplattform (200), eines Operators aus der Vielzahl verfügbarer Operatoren auf der Grundlage der Richtlinienstruktur des Benchmark-Modells; Ersetzen, durch den zufällig ausgewählten Operator, eines Operators, der im Benchmark-Modell enthalten ist und der nicht der Ausführungsplattform entspricht; und Anpassen des Parameters des Operators, um die erste Kandidatenrichtlinie zu erlangen.

6. Verfahren zur KI-Modellentwicklung nach einem der Ansprüche 1 bis 3 oder 5, wobei das Verfahren ferner Folgendes umfasst:
Erlangen, durch die Entwicklungsplattform (200), erster Differenzinformationen und zweiter Differenzinformationen, wenn der erste Ausführungsparameter nicht mit den Parameteranforderungsinformationen übereinstimmt, wobei die ersten Differenzinformationen verwendet werden, um eine Differenz zwischen dem ersten Ausführungsparameter und den Parameteranforderungsinformationen anzuzeigen, die zweiten Differenzinformationen verwendet werden, um eine Differenz zwischen dem ersten Ausführungsparameter und einem dritten Ausführungsparameter anzuzeigen, und der dritte Ausführungsparameter ein Ausführungsparameter ist, der durch Ausführen einer Verarbeitung der Testdaten des ersten Dienstes durch das Benchmark-Modell erlangt wird;
Anpassen, durch die Entwicklungsplattform (200), des Operators in der ersten Kandidatenrichtlinie auf der Grundlage der ersten Differenzinformationen und der zweiten Differenzinformationen, um eine zweite Kandidatenrichtlinie zu erlangen;
Durchführen, durch die Entwicklungsplattform (200), eines Probetrainings für die zweite Kandidatenrichtlinie, um ein zweites KI-Kandidaten-Modell zu erlangen;
Aufrufen, durch die Entwicklungsplattform (200), der Simulatorkomponente, um das zweite KI-Kandidaten-Modell auszuführen, um so einen zweiten Ausführungsparameter zu erlangen; und
wenn der zweite Ausführungsparameter mit den Parameteranforderungsinformationen übereinstimmt, Bestimmen, durch die Entwicklungsplattform (200), dass das zweite KI-Kandidaten-Modell das KI-Ziel-Modell ist.

7. Verfahren zur KI-Modellentwicklung nach einem der Ansprüche 1 bis 6, wobei, nach dem Generieren einer ersten Kandidatenrichtlinie, das Verfahren ferner Folgendes umfasst:
Komprimieren, durch die Entwicklungsplattform (200), der ersten Kandidatenrichtlinie auf der Grundlage eines Kompressionsalgorithmus, um eine erste komprimierte Kandidatenrichtlinie zu erlangen; und
das Durchführen, durch die Entwicklungsplattform (200), eines Probetrainings für die erste Kandidatenrichtlinie, um ein erstes KI-Kandidaten-Modell zu erlangen, Folgendes umfasst:
Durchführen, durch die Entwicklungsplattform (200), eines Probetrainings für die erste komprimierte Kandidatenrichtlinie, um das erste KI-Kandidaten-Modell zu erlangen.

8. Verfahren zur KI-Modellentwicklung nach einem der Ansprüche 1 bis 7, wobei, nach dem Generieren einer ersten Kandidatenrichtlinie, das Verfahren ferner Folgendes umfasst:
Kodieren, durch die Entwicklungsplattform (200), der ersten Kandidatenrichtlinie, um eine binäre Zeichenfolge der ersten Kandidatenrichtlinie zu erlangen; und
das Durchführen, durch die Entwicklungsplattform (200), eines Probetrainings für die erste Kandidatenrichtlinie, um ein erstes KI-Kandidaten-Modell zu erlangen, Folgendes umfasst:
Durchführen, durch die Entwicklungsplattform (200), eines Probetrainings für die binäre Zeichenfolge der ersten Kandidatenrichtlinie, um ein erstes KI-Kandidaten-Modell zu erlangen.

9. Verfahren zur KI-Modellentwicklung nach einem der Ansprüche 1 bis 8, wobei die Parameteranforderungsinformationen mindestens eines von Folgendem umfassen: eine Anforderung an den Leistungsverbrauch zum Ausführen des zu generierenden KI-Modells durch die Ausführungsplattform, eine Anforderung an die Genauigkeit der Verarbeitung von Daten durch das Ausführen des zu generierenden KI-Modells durch die Ausführungsplattform, eine Anforderung an die Geschwindigkeit der Verarbeitung von Daten durch das Ausführen des zu generierenden KI-Modells durch die Ausführungsplattform, eine Anforderung an den Speicherplatz, der durch das zu generierende KI-Modell belegt ist, oder eine Anforderung an den Speicherplatz, der durch die Ausführungsplattform benötigt wird, um das zu generierende KI-Modell auszuführen.

10. Verfahren zur KI-Modellentwicklung nach Anspruch 9, wobei die Parameteranforderungsinformationen mindestens die Anforderung an den Speicherplatz umfasst, der durch das zu generierende KI-Modell belegt ist;
vor dem Durchführen (S304), durch die Entwicklungsplattform (200), eines Probetrainings für die erste Kandidatenrichtlinie, um ein erstes KI-Kandidaten-Modell zu erlangen, das Verfahren ferner Folgendes umfasst:
Bestimmen, durch die Entwicklungsplattform (200), ob die erste Kandidatenrichtlinie eine zuvor festgelegte Bedingung erfüllt, wobei die zuvor festgelegte Bedingung Folgendes umfasst: Speicherplatz, der durch die erste Kandidatenrichtlinie benötigt wird, erfüllt die Anforderung an den Speicherplatz, der durch das zu generierende KI-Modell belegt ist, das in den Parameteranforderungsinformationen enthalten ist; und
das Durchführen (S304), durch die Entwicklungsplattform (200), eines Probetrainings für die erste Kandidatenrichtlinie, um ein erstes KI-Kandidaten-Modell zu erlangen, Folgendes umfasst:
wenn die erste Kandidatenrichtlinie die zuvor festgelegte Bedingung erfüllt, Durchführen, durch die Entwicklungsplattform (200), eines Probetrainings für die erste Kandidatenrichtlinie, um das erste KI-Kandidaten-Modell zu erlangen.

11. Entwicklungsplattform (1300), wobei die Entwicklungsplattform (1300) einen Prozessor (1301), einen Speicher (1302) und eine Vielzahl von Simulatorkomponenten (1303, 1304) umfasst; der Speicher (1302) und die Vielzahl von Simulatorkomponenten (1303, 1304) mit dem Prozessor (1301) gekoppelt sind; die Vielzahl von Simulatorkomponenten (1303, 1304) eine Simulatorkomponente (1303) einer Ausführungsplattform umfasst; der Speicher (1302) dazu konfiguriert ist, Computerprogrammcode zu speichern; der Computerprogrammcode eine Computeranweisung umfasst; und wenn der Prozessor (1301) die vorstehende Computeranweisung ausführt, der Prozessor (1301) zu Folgendem konfiguriert ist: Erlangen von Plattformanzeigeinformationen, Dienstanzeigeinformationen und Parameteranforderungsinformationen eines zu generierenden Modells für künstliche Intelligenz, KI-Modells, wobei die Plattformanzeigeinformationen verwendet werden, um eine Ausführungsplattform anzuzeigen, auf der das zu generierende KI-Modell ausgeführt wird, die Dienstanzeigeinformationen verwendet werden, um einen ersten Dienst anzuzeigen, der von dem zu generierenden KI-Modell auszuführen ist, und die Parameteranforderungsinformationen verwendet werden, um eine Anforderung an einen Leistungsparameter des zu generierenden KI-Modells anzuzeigen; Auswählen, aus einer Operatordatenbank, einer Vielzahl verfügbarer Operatoren, die der Ausführungsplattform entsprechen und verwendet werden, um den ersten Dienst auszuführen, wobei die Operatordatenbank eine Vielzahl von Operatoren speichert, die verwendet werden, um ein KI-Modell zu generieren; **dadurch gekennzeichnet, dass** der Prozessor ferner zu Folgendem konfiguriert ist:
Auswählen eines Operators aus der Vielzahl verfügbarer Operatoren und Festlegen eines Parameters des ausgewählten Operators, um eine erste Kandidatenrichtlinie zu generieren, wobei die erste Kandidatenrichtlinie eine Vielzahl von Operatoren umfasst und verwendet wird, eine Datenverarbeitungslogik des zu generierenden KI-Modells darzustellen; und Durchführen eines Probetrainings für die erste Kandidatenrichtlinie, um ein erstes KI-Kandidaten-Modell zu erlangen; und
der Prozessor (1301) ferner zu Folgendem konfiguriert ist: Aufrufen der Simulatorkomponente der Ausführungsplattform in der Vielzahl von Simulatorkomponenten, um das erste KI-Kandidaten-Modell auszuführen, um eine Verarbeitung an Testdaten des ersten Dienstes auszuführen, um so einen ersten Ausführungsparameter zu erlangen; und wenn der erste Ausführungsparameter mit den Parameteranforderungsinformationen übereinstimmt, Bestimmen, dass das erste KI-Kandidaten-Modell ein KI-Ziel-Modell ist.

12. Entwicklungsplattform (1300) nach Anspruch 11, wobei der Prozessor (1301) ferner zu Folgendem konfiguriert ist: nach dem Bestimmen, dass das erste KI-Kandidaten-Modell das KI-Ziel-Modell ist, Generieren, auf der Grundlage des ersten KI-Kandidaten-Modells, von Modellcode, der auf der Ausführungsplattform ausführbar ist.

13. Entwicklungsplattform (1300) nach Anspruch 11 oder 12, wobei, dass der Prozessor (1301) dazu konfiguriert ist, aus einer Operatorendatenbank eine Vielzahl verfügbarer Operatoren auszuwählen, die der Ausführungsplattform entsprechen und verwendet werden, um den ersten Dienst auszuführen, Folgendes umfasst:
wobei der Prozessor (1301) zu Folgendem konfiguriert ist: Bestimmen einer Richtlinienstruktur des zu generierenden KI-Modells auf der Grundlage des ersten Dienstes, wobei die Richtlinienstruktur verwendet wird, um die Datenverarbeitungslogik des zu generierenden KI-Modells darzustellen; Hinzufügen eines Operators zu der Richtlinienstruktur gemäß der Datenverarbeitungslogik, um die erste Kandidatenrichtlinie zu generieren; und Auswählen, aus der Operatorendatenbank, gemäß der Datenverarbeitungslogik der Vielzahl verfügbarer Operatoren, die der Ausführungsplattform entsprechen; und
dass der Prozessor (1301) zu Folgendem konfiguriert ist: Auswählen eines Operators aus der Vielzahl verfügbarer Operatoren und Festlegen eines Parameters des ausgewählten Operators, um eine erste Kandidatenrichtlinie zu generieren, wobei die erste Kandidatenrichtlinie eine Vielzahl von Operatoren umfasst, Folgendes umfasst:
wobei der Prozessor (1301) zu Folgendem konfiguriert ist: Auswählen des Operators aus der Vielzahl verfügbarer Operatoren, Hinzufügen des ausgewählten Operators zur Richtlinienstruktur und Festlegen des Parameters des ausgewählten Operators, um die erste Kandidatenrichtlinie zu generieren.

## Revendications

1. Procédé de développement de modèle à intelligence artificielle, AI, comprenant :
l'obtention (S301), par une plateforme de développement (200), d'informations d'indication de plateforme, d'informations d'indication de service et d'informations d'exigence de paramètre d'un modèle à AI à générer, dans lequel les informations d'indication de plateforme sont utilisées pour indiquer une plateforme d'exécution sur laquelle le modèle à AI à générer est exécuté, les informations d'indication de service sont utilisées pour indiquer un premier service à exécuter par le modèle à AI à générer, et les informations d'exigence de paramètre sont utilisées pour indiquer une exigence sur un paramètre de performance du modèle à AI à générer ;
la sélection (S302), par la plateforme de développement (200) à partir d'une base de données d'opérateurs, d'une pluralité d'opérateurs disponibles qui correspondent à la plateforme d'exécution et qui sont utilisés pour exécuter le premier service, dans lequel la base de données d'opérateurs stocke une pluralité d'opérateurs utilisés pour générer un modèle à AI ;
**caractérisé par** :
la sélection (S303), par la plateforme de développement (200), d'un opérateur parmi la pluralité d'opérateurs disponibles, et le réglage d'un paramètre de l'opérateur sélectionné, pour générer une première politique candidate, dans lequel la première politique candidate comprend une pluralité d'opérateurs et est utilisée pour représenter une logique de traitement de données du modèle à AI à générer ;
la réalisation (S304), par la plateforme de développement (200), d'un apprentissage d'échantillons sur la première politique candidate pour obtenir un premier modèle à AI candidat ;
l'appel (S305), par la plateforme de développement (200), d'un composant de simulateur de la plateforme d'exécution pour exécuter le premier modèle à AI candidat afin d'exécuter un traitement sur des données de test du premier service, de façon à obtenir un premier paramètre d'exécution ; et
si le premier paramètre d'exécution correspond aux informations d'exigence de paramètre, la détermination, par la plateforme de développement (200), que le premier modèle à AI candidat est un modèle à AI cible.

2. Procédé de développement de modèle à AI selon la revendication 1, dans lequel après la détermination, par la plateforme de développement (200), que le premier modèle à AI candidat est un modèle à AI cible, le procédé comprend également :
la génération (S307), par la plateforme de développement (200) sur la base du premier modèle à AI candidat, d'un code de modèle exécutable sur la plateforme d'exécution.

3. Procédé de développement de modèle à AI selon la revendication 1 ou 2, dans lequel la sélection (S302), par la plateforme de développement (200) à partir d'une base de données d'opérateurs, d'une pluralité d'opérateurs disponibles qui correspondent à la plateforme d'exécution et qui sont utilisés pour exécuter le premier service comprend :
la détermination, par la plateforme de développement (200), d'une structure de politique du modèle à AI à générer sur la base du premier service, dans lequel la structure de politique est utilisée pour représenter une logique de traitement de données du modèle à AI à générer ; et
la sélection, par la plateforme de développement (200) à partir de la base de données d'opérateurs selon la logique de traitement de données, de la pluralité d'opérateurs disponibles correspondant à la plateforme d'exécution ; et
la sélection (S303), par la plateforme de développement (200), d'un opérateur parmi la pluralité d'opérateurs disponibles, et le réglage d'un paramètre de l'opérateur sélectionné, pour générer une première politique candidate, dans lequel la première politique candidate comprend une pluralité d'opérateurs, comprend :
la sélection, par la plateforme de développement (200), de l'opérateur parmi la pluralité d'opérateurs disponibles, l'ajout de l'opérateur sélectionné à la structure de politique et le réglage du paramètre de l'opérateur sélectionné, pour générer la première politique candidate.

4. Procédé de développement de modèle à AI selon l'une quelconque des revendications 1 à 3, dans lequel le procédé comprend également :
l'obtention (S308), par la plateforme de développement (200), de premières informations de différence si le premier paramètre d'exécution ne correspond pas aux informations d'exigence de paramètre, dans lequel les premières informations de différence sont utilisées pour indiquer une différence entre le premier paramètre d'exécution et les informations d'exigence de paramètre ;
le réglage, par la plateforme de développement (200), de l'opérateur dans la première politique candidate sur la base des premières informations de différence, pour obtenir une seconde politique candidate ;
la réalisation, par la plateforme de développement (200), d'un apprentissage d'échantillons sur la seconde politique candidate pour obtenir un second modèle à AI candidat ;
l'appel, par la plateforme de développement (200), du composant de simulateur pour exécuter le second modèle à AI candidat, de façon à obtenir un deuxième paramètre d'exécution ; et
si le deuxième paramètre d'exécution correspond aux informations d'exigence de paramètre, la détermination, par la plateforme de développement (200), que le second modèle à AI candidat est un modèle à AI cible.

5. Procédé de développement de modèle à AI selon l'une quelconque des revendications 1 à 3, dans lequel avant la sélection (S303), par la plateforme de développement (200), d'un opérateur parmi la pluralité d'opérateurs disponibles, et le réglage d'un paramètre de l'opérateur sélectionné, pour générer une première politique candidate, le procédé comprend également :
la détermination, par la plateforme de développement (200), d'un modèle de référence du premier service, dans lequel le modèle de référence est un modèle à AI utilisé pour traiter le premier service, la structure de politique du modèle à AI à générer est une structure de politique du modèle de référence, et la structure de politique est utilisée pour représenter une logique de traitement de données du modèle de référence ; et
la sélection (S303), par la plateforme de développement (200), d'un opérateur parmi la pluralité d'opérateurs disponibles, et le réglage d'un paramètre de l'opérateur sélectionné, pour générer une première politique candidate, comprend :
la sélection de manière aléatoire, par la plateforme de développement (200), d'un opérateur parmi la pluralité d'opérateurs disponibles sur la base de la structure de politique du modèle de référence ; le remplacement, par l'opérateur sélectionné de manière aléatoire, d'un opérateur qui est dans le modèle de référence et qui ne correspond pas à la plateforme d'exécution ; et le réglage du paramètre de l'opérateur, pour obtenir la première politique candidate.

6. Procédé de développement de modèle à AI selon l'une quelconque des revendications 1 à 3 ou 5, dans lequel le procédé comprend également :
l'obtention, par la plateforme de développement (200), de premières informations de différence et de secondes informations de différence si le premier paramètre d'exécution ne correspond pas aux informations d'exigence de paramètre, dans lequel les premières informations de différence sont utilisées pour indiquer une différence entre le premier paramètre d'exécution et les informations d'exigence de paramètre, les secondes informations de différence sont utilisées pour indiquer une différence entre le premier paramètre d'exécution et un troisième paramètre d'exécution, et le troisième paramètre d'exécution est un paramètre d'exécution obtenu par l'exécution d'un traitement sur les données de test du premier service par le modèle de référence ;
le réglage, par la plateforme de développement (200), de l'opérateur dans la première politique candidate sur la base des premières informations de différence et des secondes informations de différence, pour obtenir une seconde politique candidate ;
la réalisation, par la plateforme de développement (200), d'un apprentissage d'échantillons sur la seconde politique candidate pour obtenir un second modèle à AI candidat ;
l'appel, par la plateforme de développement (200), du composant de simulateur pour exécuter le second modèle à AI candidat, de façon à obtenir un deuxième paramètre d'exécution ; et
si le deuxième paramètre d'exécution correspond aux informations d'exigence de paramètre, la détermination, par la plateforme de développement (200), que le second modèle à AI candidat est un modèle à AI cible.

7. Procédé de développement de modèle à AI selon l'une quelconque des revendications 1 à 6, dans lequel après la génération d'une première politique candidate, le procédé comprend également :
la compression, par la plateforme de développement (200), de la première politique candidate sur la base d'un algorithme de compression, pour obtenir une première politique candidate compressée ; et
la réalisation, par la plateforme de développement (200), d'un apprentissage d'échantillons sur la première politique candidate pour obtenir un premier modèle à AI candidat comprend :
la réalisation, par la plateforme de développement (200), d'un apprentissage d'échantillons sur la première politique candidate compressée pour obtenir le premier modèle à AI candidat.

8. Procédé de développement de modèle à AI selon l'une quelconque des revendications 1 à 7, dans lequel après la génération d'une première politique candidate, le procédé comprend également :
le codage, par la plateforme de développement (200), de la première politique candidate pour obtenir une chaîne binaire de la première politique candidate ; et
la réalisation, par la plateforme de développement (200), d'un apprentissage d'échantillons sur la première politique candidate pour obtenir un premier modèle à AI candidat comprend :
la réalisation, par la plateforme de développement (200), d'un apprentissage d'échantillons sur la chaîne binaire de la première politique candidate pour obtenir le premier modèle à AI candidat.

9. Procédé de développement de modèle à AI selon l'une quelconque des revendications 1 à 8, dans lequel les informations d'exigence de paramètre comprennent au moins l'une : d'une exigence sur la consommation d'énergie pour exécuter le modèle à AI à générer par la plateforme d'exécution, d'une exigence sur la précision du traitement des données en exécutant le modèle à AI à générer par la plateforme d'exécution, d'une exigence sur une vitesse de traitement des données en exécutant le modèle à AI à générer par la plateforme d'exécution, d'une exigence sur l'espace de stockage occupé par le modèle à AI à générer, ou d'une exigence en matière d'espace de stockage requis par la plateforme d'exécution pour exécuter le modèle à AI à générer.

10. Procédé de développement de modèle à AI selon la revendication 9, dans lequel les informations d'exigence de paramètre comprennent au moins l'exigence sur l'espace de stockage occupé par le modèle à AI à générer ;
avant la réalisation (S304), par la plateforme de développement (200), d'un apprentissage d'échantillons sur la première politique candidate pour obtenir un premier modèle à AI candidat, le procédé comprend également :
la détermination, par la plateforme de développement (200), du fait de savoir si la première politique candidate répond à une condition prédéfinie, dans lequel la condition prédéfinie comprend : l'espace de stockage requis par la première politique candidate répond à l'exigence sur l'espace de stockage occupé par le modèle à AI à générer qui est compris dans les informations d'exigence de paramètre ; et
la réalisation (S304), par la plateforme de développement (200), d'un apprentissage d'échantillons sur la première politique candidate pour obtenir un premier modèle à AI candidat comprend :
si la première politique candidate répond à la condition prédéfinie, la réalisation, par la plateforme de développement (200), d'un apprentissage d'échantillons sur la première politique candidate pour obtenir le premier modèle à AI candidat.

11. Plateforme de développement (1300), dans laquelle la plateforme de développement (1300) comprend un processeur (1301), une mémoire (1302) et une pluralité de composants de simulateur (1303, 1304) ; la mémoire (1302) et la pluralité de composants de simulateur (1303, 1304) sont couplés au processeur (1301) ; la pluralité de composants de simulateur (1303, 1304) comprennent un composant de simulateur (1303) d'une plateforme d'exécution ; la mémoire (1302) est configurée pour stocker un code de programme informatique ; le code de programme informatique comprend une instruction informatique ; et lorsque le processeur (1301) exécute l'instruction informatique précédente,
le processeur (1301) est configuré pour : obtenir des informations d'indication de plateforme, des informations d'indication de service et des informations d'exigence de paramètre d'un modèle à intelligence artificielle AI à générer, dans lequel les informations d'indication de plateforme sont utilisées pour indiquer une plateforme d'exécution sur laquelle le modèle à AI à générer est exécuté, les informations d'indication de service sont utilisées pour indiquer un premier service à exécuter par le modèle à AI à générer et les informations d'exigence de paramètre sont utilisées pour indiquer une exigence sur un paramètre de performance du modèle à AI à générer ; sélectionner, à partir d'une base de données d'opérateurs, une pluralité d'opérateurs disponibles qui correspondent à la plateforme d'exécution et qui sont utilisés pour exécuter le premier service, dans lequel la base de données d'opérateurs stocke une pluralité d'opérateurs utilisés pour générer un modèle à AI ; **caractérisé en ce que** le processeur est en outre configuré pour :
sélectionner un opérateur parmi la pluralité d'opérateurs disponibles, et régler un paramètre de l'opérateur sélectionné, pour générer une première politique candidate, dans lequel la première politique candidate comprend une pluralité d'opérateurs et est utilisée pour représenter une logique de traitement de données du modèle à AI à générer ; et réaliser un apprentissage d'échantillons sur la première politique candidate pour obtenir un premier modèle à AI candidat ; et
le processeur (1301) est en outre configuré pour : appeler le composant de simulateur de la plateforme d'exécution dans la pluralité de composants de simulateur pour exécuter le premier modèle à AI candidat afin d'exécuter un traitement sur des données de test du premier service, de façon à obtenir un premier paramètre d'exécution ; et si le premier paramètre d'exécution correspond aux informations d'exigence de paramètre, déterminer que le premier modèle à AI candidat est un modèle à AI cible.

12. Plateforme de développement (1300) selon la revendication 11, dans laquelle le processeur (1301) est en outre configuré pour : après la détermination que le premier modèle à AI candidat est le modèle à AI cible, générer, sur la base du premier modèle à AI candidat, un code de modèle exécutable sur la plateforme d'exécution.

13. Plateforme de développement (1300) selon la revendication 11 ou 12, dans laquelle le processeur (1301) est configuré pour sélectionner, à partir d'une base de données d'opérateurs, une pluralité d'opérateurs disponibles qui correspondent à la plateforme d'exécution et qui sont utilisés pour exécuter le premier service comprend :
le processeur (1301) étant configuré pour : déterminer une structure de politique du modèle à AI à générer sur la base du premier service, dans laquelle la structure de politique est utilisée pour représenter une logique de traitement de données du modèle à AI à générer ; ajouter un opérateur à la structure de politique selon la logique de traitement de données pour générer la première politique candidate ; et sélectionner, à partir de la base de données d'opérateurs selon la logique de traitement de données, la pluralité d'opérateurs disponibles qui correspondent à la plateforme d'exécution ; et
en ce que le processeur (1301) est configuré pour : sélectionner un opérateur parmi la pluralité d'opérateurs disponibles et régler un paramètre de l'opérateur sélectionné, pour générer une première politique candidate, dans laquelle la première politique candidate comprend une pluralité d'opérateurs, comprend :
le processeur (1301) étant configuré pour : sélectionner l'opérateur parmi la pluralité d'opérateurs disponibles, ajouter l'opérateur sélectionné à la structure de politique et régler le paramètre de l'opérateur sélectionné, pour générer la première politique candidate.
